# EUROPEAN PATENT APPLICATION

(11) **EP 4 694 313 A1**
(43) Date of publication of application: **11.02.2026**
(21) Application number: 24791955.8
(22) Date of filing: 15.04.2024
(51) Int. Cl.: H04W 28/06

(54) **WIRELESS COMMUNICATION METHOD AND COMMUNICATION APPARATUS**

(30) Priority: 19.04.2023 CN 202310436714
(71) Applicant: Huawei Technologies Co., Ltd., Shenzhen, Guangdong 518129 (CN)
(72) Inventor: GUO, Yuchen, Shenzhen, Guangdong 518129 (CN); HUANG, Guogang, Shenzhen, Guangdong 518129 (CN); LI, Yunbo, Shenzhen, Guangdong 518129 (CN); GAN, Ming, Shenzhen, Guangdong 518129 (CN)
(74) Representative: Thun, Clemens
(86) International application number: PCT/CN2024/087700
(87) International publication number: WO 2024/217370

(57) **Abstract**

This application provides a wireless communication method and a communication apparatus. This application is applied to a wireless local area network system that supports series protocols such as a next-generation Wi-Fi protocol of the IEEE 802.11ax, for example, 802.11be, and Wi-Fi 7, and a next-generation protocol of the 802.11be, for example, Wi-Fi 8, and may be further applied to an ultra-bandwidth-based wireless personal area network system. The method includes: An access point 1 generates a radio frame and sends the radio frame, where the radio frame includes a multiple basic service set identifier element and a target wake time element located outside the multiple basic service set identifier element, the target wake time element includes a restricted target wake time parameter of an access point 2 and identification information of the access point 2, and the multiple basic service set identifier element corresponds to a multiple basic service set identifier set to which the access point 1 and the access point 2 belong. The identification information of the access point 2 is included. This helps a station determine that the restricted target wake time parameter belongs to the access point 2.

## Description

This application claims priority to Chinese Patent Application No. 202310436714.6, filed with the China National Intellectual Property Administration on April 19, 2023 and entitled "WIRELESS COMMUNICATION METHOD AND COMMUNICATION APPARATUS", which is incorporated herein by reference in its entirety.

### TECHNICAL FIELD

This application relates to the field of communication technologies, and more specifically, to a wireless communication method and a communication apparatus.

### BACKGROUND

In Wi-Fi 6, a target wake time (target wake time, TWT) energy saving technology is defined. In the TWT technology, a station (station, STA) establishes a TWT agreement with an access point (access point, AP), to determine an active time period and a sleep time period of the STA, so as to save energy. Based on the TWT mechanism, in the 802.11be protocol, a restricted TWT (restricted TWT, RTWT) mechanism for low-delay service transmission is newly defined, and the restricted TWT mechanism may be applied to a multiple basic service set identifier (multiple basic service set identifier, MBSSID) technology.

In the MBSSID technology, one physical AP may be virtualized into a plurality of logical APs, each logical AP manages one basic service set (basic service set, BSS), and different logical APs have different BSS identifiers (identifiers, IDs). In the plurality of logical APs, a BSSID of one logical AP is configured as a transmitted (transmitted) BSSID, and the logical AP is referred to as a transmitted AP; and a BSSID of a remaining logical AP is configured as a non-transmitted (non-transmitted) BSSID, and the logical AP is referred to as a non-transmitted AP. BSSID information of the non-transmitted AP may be determined based on an MBSSID element (multiple BSSID element) included in a beacon frame sent by the transmitted AP. The BSSID information of the non-transmitted AP includes RTWT information of the non-transmitted AP.

Currently, when the beacon frame is used for communication of RTWT agreement establishment between the transmitted AP and the STA, the STA cannot clearly and efficiently determine the RTWT information of the non-transmitted AP based on the beacon frame. Therefore, how to enable the STA to clearly and efficiently determine the RTWT information of the non-transmitted AP based on the beacon frame is an urgent technical problem to be resolved currently.

### SUMMARY

This application provides a wireless communication method and a communication apparatus, so that a station can clearly and efficiently determine RTWT information of a non-transmitted access point.

According to a first aspect, a wireless communication method is provided, including: A first access point generates a radio frame, where the radio frame includes an MBSSID element and a TWT element located outside the MBSSID element, the TWT element includes a first RTWT parameter of a second access point and identification information of the second access point, and the MBSSID element corresponds to an MBSSID set (multiple BSSID set) to which the first access point and the second access point belong; and the first access point sends the radio frame.

Specifically, when the TWT element includes the RTWT parameter of the second access point, the TWT element includes the identification information of the second access point. This helps the station clearly and efficiently determine, based on the identification information, that the RTWT parameter belongs to the second access point; and helps the station perform further processing on the RTWT parameter, for example, an operation like ignoring or reading.

In a possible implementation, the MBSSID element does not include a second RTWT parameter of the second access point, and the first RTWT parameter is the same as the second RTWT parameter.

According to the foregoing technical solution, overheads and air interface duration occupied by the radio frame can be effectively reduced. Correspondingly, the station does not need to repeatedly process the RTWT parameter of the second access point. This helps reduce power consumption of the station.

In a possible implementation, the MBSSID element includes a second RTWT parameter of the second access point, and the first RTWT parameter is the same as the second RTWT parameter; and the identification information of the second access point indicates to ignore the first RTWT parameter or the second RTWT parameter.

Based on the identification information, in this application, the station does not need to repeatedly process the RTWT parameter of the second access point. This helps reduce power consumption and processing duration of the station.

In a possible implementation, the identification information of the second access point includes a basic service set identifier index or a first value.

It may be understood that the first value may be used to identify the second access point. In this application, a specific value of the first value used to identify the second access point is predefined in the protocol.

The basic service set identifier index is included in the TWT element. This helps implement compatibility with an existing frame structure. The first value is included in the TWT element. This helps reduce signaling overheads.

In a possible implementation, the TWT element further includes identification information of a third access point and a third RTWT parameter of the third access point.

According to the foregoing technical solution, in a scenario related to a co-hosted BSSID set, the station may determine, based on the identification information of the third access point, whether the third RTWT parameter belongs to the co-hosted set. If the third RTWT parameter belongs to the co-hosted set, the MBSSID element does not need to be processed; or if the third RTWT parameter does not belong to the co-hosted set, the station determines, based on the identification information, whether the third RTWT parameter belongs to the third access point in the MBSSID set. This helps the station perform further processing on the RTWT parameter, for example, an operation like ignoring or reading the MBSSID element, or reading the MBSSID element but not reading the RTWT parameter of the third access point included in the TWT element.

In a possible implementation, the identification information of the third access point includes a second value.

In a possible implementation, the second value is used to identify whether the third access point and the first access point belong to a same co-hosted set.

In another possible implementation, the second value may be used to identify that the third access point and the first access point belong to a same MBSSID set. In this application, a specific value of the second value used to identify the third access point is predefined in the protocol.

In a possible implementation, the identification information of the second access point is included in TWT parameter information in the TWT element.

In this way, compatibility with an existing frame structure can be implemented.

In a possible implementation, the identification information of the third access point is included in TWT parameter information in the TWT element.

In this way, compatibility with an existing frame structure can be implemented.

In a possible implementation, the identification information of the second access point is included in nominal minimum TWT wake duration in the TWT parameter information; or the identification information of the second access point is included in broadcast TWT information in the TWT parameter information; or the identification information of the second access point is included in a basic service set identifier index field in the TWT parameter information.

In this way, compatibility with an existing frame structure can be implemented.

In a possible implementation, the identification information of the third access point is included in nominal minimum TWT wake duration in the TWT parameter information; or the identification information of the third access point is included in broadcast TWT information in the TWT parameter information; or the identification information of the third access point is included in a basic service set identifier index field in the TWT parameter information.

In this way, compatibility with an existing frame structure can be implemented.

In a possible implementation, the broadcast TWT information includes a broadcast TWT identifier or a basic service set identifier index subfield.

In this way, compatibility with an existing frame structure can be implemented.

According to a second aspect, a wireless communication method is provided, including: A first access point generates a radio frame, where the radio frame includes a target wake time TWT element, a first TWT element includes a first restricted target wake time RTWT parameter of a second access point and identification information of the second access point, and the second access point and the first access point belong to a same co-hosted basic service set identifier co-hosted BSSID set; and the first access point sends the radio frame.

Specifically, when the TWT element includes the RTWT parameter of the second access point, the TWT element includes the identification information of the second access point. This helps the station clearly and efficiently determine, based on the identification information, that the RTWT parameter belongs to the second access point; and helps the station perform further processing on the RTWT parameter, for example, an operation like ignoring or reading.

In a possible implementation, the identification information of the second access point includes a first value.

It may be understood that the first value may be used to identify the second access point. In this application, a specific value of the first value used to identify the second access point is predefined in the protocol.

The first value is included in the TWT element. This helps reduce signaling overheads.

In a possible implementation, the identification information of the second access point is included in TWT parameter information in the TWT element.

In this way, compatibility with an existing frame structure can be implemented.

In a possible implementation, the identification information of the second access point is included in nominal minimum TWT wake duration in the TWT parameter information; or the identification information of the second access point is included in broadcast TWT information in the TWT parameter information; or the identification information of the second access point is included in a basic service set identifier index field in the TWT parameter information.

In this way, compatibility with an existing frame structure can be implemented.

In a possible implementation, the broadcast TWT information includes a broadcast TWT identifier or a basic service set identifier index subfield.

In this way, compatibility with an existing frame structure can be implemented.

According to a third aspect, a wireless communication method is provided, including: A first access point generates a radio frame, where the radio frame includes indication information; the indication information indicates whether to read all non-transmitted BSSID profile in a multiple basic service set identifier MBSSID element, or the indication information indicates whether to read first non-transmitted BSSID profile in an MBSSID element; and the first access point and a non-transmitted access point corresponding to the non-transmitted BSSID profile belong to a same MBSSID set; and the first access point sends the radio frame.

The indication information is included in the radio frame, and the station determines, based on an indication of the indication information, whether the non-transmitted BSSID profile in the MBSSID element needs to be read. This can avoid unnecessary energy consumption caused by a case in which the station reads the non-transmitted BSSID profile when the non-transmitted BSSID profile does not include RTWT information of a non-transmitted AP.

In a possible implementation, the radio frame further includes the MBSSID element, and the indication information is located in the MBSSID element, or the indication information is located outside the MBSSID element.

Specifically, when the indication information is located in the MBSSID element, in this application, the station may independently process the MBSSID element; or when the indication information is located outside the MBSSID element, in this application, the station may determine in advance whether the MBSSID element needs to be processed.

According to a fourth aspect, a wireless communication method is provided, including: A station receives a radio frame from a first access point, where the radio frame includes an MBSSID element and a TWT element located outside the MBSSID element, the TWT element includes a first RTWT parameter of a second access point and identification information of the second access point, and the MBSSID element corresponds to an MBSSID set to which the first access point and the second access point belong; and the station determines, based on the identification information, that the first RTWT parameter belongs to the second access point.

Specifically, when the TWT element includes the RTWT parameter of the second access point, the station determines, based on the identification information of the second access point included in the TWT element, that the RTWT parameter belongs to the second access point. This helps the station perform further processing on the RTWT parameter, for example, an operation like ignoring or reading.

In a possible implementation, the MBSSID element does not include a second RTWT parameter of the second access point, and the first RTWT parameter is the same as the second RTWT parameter.

According to the foregoing technical solution, overheads and air interface duration occupied by the radio frame can be effectively reduced. Correspondingly, the station does not need to repeatedly process the RTWT parameter of the second access point. This helps reduce power consumption of the station.

In a possible implementation, the MBSSID element includes a second RTWT parameter of the second access point, the first RTWT parameter is the same as the second RTWT parameter, and the method further includes: The station determines, based on the identification information, to ignore the first RTWT parameter or the second RTWT parameter.

Based on the identification information, in this application, the station does not need to repeatedly process the RTWT parameter of the second access point. This helps reduce power consumption and processing duration of the station.

In a possible implementation, the identification information of the second access point includes a basic service set identifier index or a first value.

It may be understood that the first value may be used to identify the second access point. In this application, a specific value of the first value used to identify the second access point is predefined in the protocol.

The basic service set identifier index is included in the TWT element. This helps implement compatibility with an existing frame structure. The first value is included in the TWT element. This helps reduce signaling overheads.

In a possible implementation, the TWT element further includes identification information of a third access point and a third RTWT parameter of the third access point.

According to the foregoing technical solution, in this application, in a hybrid scenario of the MBSSID set and a co-hosted BSSID set, the station can clearly and efficiently determine that the RTWT parameter in the TWT element belongs to the second access point.

In a possible implementation, the identification information of the third access point includes a second value.

In a possible implementation, the second value is used to identify whether the third access point and the first access point belong to a same co-hosted set.

In another possible implementation, the second value may be used to identify that the third access point and the first access point belong to a same MBSSID set. In this application, a specific value of the second value used to identify the third access point is predefined in the protocol.

In a possible implementation, the identification information of the second access point is included in TWT parameter information in the TWT element.

In a possible implementation, the identification information of the third access point is included in TWT parameter information in the TWT element.

In a possible implementation, the identification information of the second access point is included in nominal minimum TWT wake duration in the TWT parameter information; or the identification information of the second access point is included in broadcast TWT information in the TWT parameter information; or the identification information of the second access point is included in a basic service set identifier index field in the TWT parameter information.

In a possible implementation, the identification information of the third access point is included in nominal minimum TWT wake duration in the TWT parameter information; or the identification information of the third access point is included in broadcast TWT information in the TWT parameter information; or the identification information of the third access point is included in a basic service set identifier index field in the TWT parameter information.

In a possible implementation, the broadcast TWT information includes a broadcast TWT identifier or a basic service set identifier index subfield.

In a possible implementation, the method further includes: The station terminates a transmit opportunity based on the first RTWT parameter or the second RTWT parameter before an RTWT service period of the second access point; or the station determines, based on the first RTWT parameter or the second RTWT parameter before an RTWT service period of the second access point, whether to initiate transmission.

In this way, the station may not cause interference to low-delay service transmission of the second access point.

According to a fifth aspect, a wireless communication method is provided, including: A station receives a radio frame from a first access point, where the radio frame includes a TWT element, the TWT element includes a first RTWT parameter of a second access point and identification information of the second access point, and the first access point and the second access point belong to a same co-hosted MBSSID set; and the station determines, based on the identification information, that the first RTWT parameter belongs to the second access point.

Specifically, when the TWT element includes the RTWT parameter of the second access point, the station determines, based on the identification information of the second access point included in the TWT element, that the RTWT parameter belongs to the second access point. This helps the station perform further processing on the RTWT parameter, for example, an operation like ignoring or reading.

In a possible implementation, the identification information of the second access point includes a first value.

It may be understood that the first value may be used to identify the second access point. In this application, a specific value of the first value used to identify the second access point is predefined in the protocol.

In a possible implementation, the identification information of the second access point is included in TWT parameter information in the TWT element.

In a possible implementation, the identification information of the second access point is included in nominal minimum TWT wake duration in the TWT parameter information; or the identification information of the second access point is included in broadcast TWT information in the TWT parameter information; or the identification information of the second access point is included in a basic service set identifier index field in the TWT parameter information.

In a possible implementation, the broadcast TWT information includes a broadcast TWT identifier or a basic service set identifier index subfield.

In a possible implementation, the method further includes: The station terminates a transmit opportunity based on the first RTWT parameter or the second RTWT parameter before an RTWT service period of the second access point; or the station determines, based on the first RTWT parameter or the second RTWT parameter before an RTWT service period of the second access point, whether to initiate transmission.

In a possible implementation, the method further includes: The station terminates a transmit opportunity based on the first RTWT parameter before an RTWT service period of the second access point; or the station determines, based on the first RTWT parameter before an RTWT service period of the second access point, whether to initiate transmission.

According to a sixth aspect, a wireless communication method is provided, including: A station receives a radio frame from a first access point, where the radio frame includes indication information; the indication information indicates whether to read all non-transmitted BSSID profile in a multiple basic service set identifier MBSSID element, or the indication information indicates whether to read first non-transmitted BSSID profile in an MBSSID element; and the first access point and a non-transmitted access point corresponding to the non-transmitted BSSID profile belong to a same MBSSID set; and the station determines, based on the indication information, whether to read all the non-transmitted BSSID profile or the first non-transmitted BSSID profile.

In a possible implementation, the radio frame further includes the MBSSID element, and the indication information is located in the MBSSID element, or the indication information is located outside the MBSSID element.

In a possible implementation, when the indication information indicates to read all the non-transmitted BSSID profile or the first non-transmitted BSSID profile, the method further includes: The station terminates a transmit opportunity based on an RTWT parameter corresponding to the non-transmitted BSSID profile before an RTWT service period of the non-transmitted access point corresponding to the non-transmitted BSSID profile; or the station determines, based on an RTWT parameter corresponding to the non-transmitted BSSID profile before an RTWT service period of the non-transmitted access point corresponding to the non-transmitted BSSID profile, whether to initiate transmission.

According to a seventh aspect, a communication apparatus is provided, including: a processing unit, configured to generate a radio frame, where the radio frame includes an MBSSID element and a TWT element located outside the MBSSID element, the TWT element includes a first RTWT parameter of a second access point and identification information of the second access point, and the MBSSID element corresponds to an MBSSID set to which the communication apparatus and the second access point belong; and a transceiver unit, configured to send the radio frame.

In a possible implementation, the MBSSID element does not include a second RTWT parameter of the second access point, and the first RTWT parameter is the same as the second RTWT parameter.

In a possible implementation, the MBSSID element includes a second RTWT parameter of the second access point, and the first RTWT parameter is the same as the second RTWT parameter; and the identification information of the second access point indicates to ignore the first RTWT parameter or the second RTWT parameter.

In a possible implementation, the identification information of the second access point includes a basic service set identifier index or a first value.

In a possible implementation, the TWT element further includes identification information of a third access point and a third RTWT parameter of the third access point.

In a possible implementation, the identification information of the third access point includes a second value.

In a possible implementation, the second value is used to identify whether the third access point and the first access point belong to a same co-hosted set.

In another possible implementation, the second value may be used to identify that the third access point and the first access point belong to a same MBSSID set.

In a possible implementation, the identification information of the second access point is included in TWT parameter information in the TWT element.

In a possible implementation, the identification information of the third access point is included in TWT parameter information in the TWT element.

In a possible implementation, the identification information of the second access point is included in nominal minimum TWT wake duration in the TWT parameter information; or the identification information of the second access point is included in broadcast TWT information in the TWT parameter information; or the identification information of the second access point is included in a basic service set identifier index field in the TWT parameter information.

In a possible implementation, the identification information of the third access point is included in nominal minimum TWT wake duration in the TWT parameter information; or the identification information of the third access point is included in broadcast TWT information in the TWT parameter information; or the identification information of the third access point is included in a basic service set identifier index field in the TWT parameter information.

In a possible implementation, the broadcast TWT information includes a broadcast TWT identifier or a basic service set identifier index subfield.

According to an eighth aspect, a communication apparatus is provided, including: a processing unit, configured to generate a radio frame, where the radio frame includes a TWT element, the TWT element includes a first RTWT parameter of a second access point and identification information of the second access point, and the communication apparatus and the second access point belong to a same co-hosted MBSSID set; and a transceiver unit, configured to send the radio frame.

In a possible implementation, the identification information of the second access point includes a first value.

In a possible implementation, the identification information of the second access point is included in TWT parameter information in the TWT element.

In a possible implementation, the identification information of the second access point is included in nominal minimum TWT wake duration in the TWT parameter information; or the identification information of the second access point is included in broadcast TWT information in the TWT parameter information; or the identification information of the second access point is included in a basic service set identifier index field in the TWT parameter information.

In a possible implementation, the broadcast TWT information includes a broadcast TWT identifier or a basic service set identifier index subfield.

According to a ninth aspect, a communication apparatus is provided, including: a processing unit, configured to generate a radio frame, where the radio frame includes indication information; the indication information indicates whether to read all non-transmitted BSSID profile in a multiple basic service set identifier MBSSID element, or the indication information indicates whether to read first non-transmitted BSSID profile in an MBSSID element; and the communication apparatus and a non-transmitted access point corresponding to the non-transmitted BSSID profile belong to a same MBSSID set; and a transceiver unit, configured to send the radio frame.

In a possible implementation, the radio frame further includes the MBSSID element, and the indication information is located in the MBSSID element, or the indication information is located outside the MBSSID element.

According to a tenth aspect, a communication apparatus is provided, including: a transceiver unit, configured to receive a radio frame from a first access point, where the radio frame includes an MBSSID element and a TWT element located outside the MBSSID element, the TWT element includes a first RTWT parameter of a second access point and identification information of the second access point, and the MBSSID element corresponds to an MBSSID set to which the first access point and the second access point belong; and a processing unit, configured to determine, based on the identification information, that the first RTWT parameter belongs to the second access point.

In a possible implementation, the MBSSID element does not include a second RTWT parameter of the second access point, and the first RTWT parameter is the same as the second RTWT parameter.

In a possible implementation, the MBSSID element includes a second RTWT parameter of the second access point, the first RTWT parameter is the same as the second RTWT parameter, and the processing unit is further configured to determine, based on the identification information, to ignore the first RTWT parameter or the second RTWT parameter.

In a possible implementation, the identification information of the second access point includes a basic service set identifier index or a first value.

In a possible implementation, the TWT element further includes identification information of a third access point and a third RTWT parameter of the third access point.

In a possible implementation, the identification information of the third access point includes a second value.

In a possible implementation, the second value is used to identify whether the third access point and the first access point belong to a same co-hosted set.

In another possible implementation, the second value may be used to identify that the third access point and the first access point belong to a same MBSSID set.

In a possible implementation, the identification information of the second access point is included in TWT parameter information in the TWT element.

In a possible implementation, the identification information of the third access point is included in TWT parameter information in the TWT element.

In a possible implementation, the identification information of the second access point is included in nominal minimum TWT wake duration in the TWT parameter information; or the identification information of the second access point is included in broadcast TWT information in the TWT parameter information; or the identification information of the second access point is included in a basic service set identifier index field in the TWT parameter information.

In a possible implementation, the identification information of the third access point is included in nominal minimum TWT wake duration in the TWT parameter information; or the identification information of the third access point is included in broadcast TWT information in the TWT parameter information; or the identification information of the third access point is included in a basic service set identifier index field in the TWT parameter information.

In a possible implementation, the broadcast TWT information includes a broadcast TWT identifier or a basic service set identifier index subfield.

In a possible implementation, the processing unit is further configured to: terminate a transmit opportunity based on the first RTWT parameter or the second RTWT parameter before an RTWT service period of the second access point; or determine, based on the first RTWT parameter or the second RTWT parameter before an RTWT service period of the second access point, whether to initiate transmission.

According to an eleventh aspect, a communication apparatus is provided, including: a transceiver unit, configured to receive a radio frame from a first access point, where the radio frame includes a TWT element, the TWT element includes a first RTWT parameter of a second access point and identification information of the second access point, and the first access point and the second access point belong to a same co-hosted MBSSID set; and a processing unit, configured to determine, based on the identification information, that the first RTWT parameter belongs to the second access point.

In a possible implementation, the identification information of the second access point includes a first value.

In a possible implementation, the identification information of the second access point is included in TWT parameter information in the TWT element.

In a possible implementation, the identification information of the second access point is included in nominal minimum TWT wake duration in the TWT parameter information; or the identification information of the second access point is included in broadcast TWT information in the TWT parameter information; or the identification information of the second access point is included in a basic service set identifier index field in the TWT parameter information.

In a possible implementation, the broadcast TWT information includes a broadcast TWT identifier or a basic service set identifier index subfield.

In a possible implementation, the processing unit is further configured to: terminate a transmit opportunity based on the first RTWT parameter before an RTWT service period of the second access point; or determine, based on the first RTWT parameter before an RTWT service period of the second access point, whether to initiate transmission.

According to a twelfth aspect, a communication apparatus is provided, including: a transceiver unit, configured to receive a radio frame from a first access point, where the radio frame includes indication information; the indication information indicates whether to read all non-transmitted BSSID profile in a multiple basic service set identifier MBSSID element, or the indication information indicates whether to read first non-transmitted BSSID profile in an MBSSID element; and the first access point and a non-transmitted access point corresponding to the non-transmitted BSSID profile belong to a same MBSSID set; and a processing unit, configured to determine, based on the indication information, whether to read all the non-transmitted BSSID profile or the first non-transmitted BSSID profile.

In a possible implementation, the radio frame further includes the MBSSID element, and the indication information is located in the MBSSID element, or the indication information is located outside the MBSSID element.

In a possible implementation, when the indication information indicates to read all the non-transmitted BSSID profile or the first non-transmitted BSSID profile, the processing unit is further configured to: terminate a transmit opportunity based on an RTWT parameter corresponding to the non-transmitted BSSID profile before an RTWT service period of the non-transmitted access point corresponding to the non-transmitted BSSID profile; or determine, based on an RTWT parameter corresponding to the non-transmitted BSSID profile before an RTWT service period of the non-transmitted access point corresponding to the non-transmitted BSSID profile, whether to initiate transmission.

According to a thirteenth aspect, a communication device is provided, including a communication interface and a processor. The processor is configured to execute a computer program or instructions, so that the communication device performs the method according to any one of the first aspect and the possible implementations of the first aspect; or the communication device performs the method according to any one of the second aspect and the possible implementations of the second aspect; or the communication device performs the method according to any one of the third aspect and the possible implementations of the third aspect; or the communication device performs the method according to any one of the fourth aspect and the possible implementations of the fourth aspect; or the communication device performs the method according to any one of the fifth aspect and the possible implementations of the fifth aspect; or the communication device performs the method according to any one of the sixth aspect and the possible implementations of the sixth aspect.

According to a fourteenth aspect, a computer-readable storage medium is provided. The computer storage medium stores program instructions. When the program instructions are executed by a computer, the computer is enabled to perform the method according to any one of the first aspect and the possible implementations of the first aspect; or the computer is enabled to perform the method according to any one of the second aspect and the possible implementations of the second aspect; or the computer is enabled to perform the method according to any one of the third aspect and the possible implementations of the third aspect; or the computer is enabled to perform the method according to any one of the fourth aspect and the possible implementations of the fourth aspect; or the computer is enabled to perform the method according to any one of the fifth aspect and the possible implementations of the fifth aspect; or the computer is enabled to perform the method according to any one of the sixth aspect and the possible implementations of the sixth aspect.

According to a fifteenth aspect, a computer program product is provided, including instructions. When the instructions are run on a computer, the computer is enabled to perform the method according to any one of the first aspect and the possible implementations of the first aspect; or the computer is enabled to perform the method according to any one of the second aspect and the possible implementations of the second aspect; or the computer is enabled to perform the method according to any one of the third aspect and the possible implementations of the third aspect; or the computer is enabled to perform the method according to any one of the fourth aspect and the possible implementations of the fourth aspect; or the computer is enabled to perform the method according to any one of the fifth aspect and the possible implementations of the fifth aspect; or the computer is enabled to perform the method according to any one of the sixth aspect and the possible implementations of the sixth aspect.

### BRIEF DESCRIPTION OF DRAWINGS

FIG. 1 is a diagram of an application scenario 100 according to an embodiment of this application;
FIG. 2 is a diagram of a frame structure of a TWT element;
FIG. 3 is a diagram of an interaction procedure of a wireless communication method 300 according to an embodiment of this application;
FIG. 4 is a diagram of a frame structure of a TWT element 1 according to an embodiment of this application;
FIG. 5 is a diagram of another frame structure of a TWT element 1 according to an embodiment of this application;
FIG. 6 is a diagram of still another frame structure of a TWT element 1 according to an embodiment of this application;
FIG. 7 is a diagram of an interaction procedure of a wireless communication method 700 according to an embodiment of this application;
FIG. 8 is a block diagram of a communication apparatus 800 according to an embodiment of this application;
FIG. 9 is a block diagram of a communication apparatus 900 according to an embodiment of this application;
FIG. 10 is a block diagram of a communication apparatus 1000 according to an embodiment of this application; and
FIG. 11 is a block diagram of a communication apparatus 1100 according to an embodiment of this application.

### DESCRIPTION OF EMBODIMENTS

Technical solutions of this application are described below with reference to the accompanying drawings.

The technical solutions provided in this application are applicable to a wireless local area network (wireless local area network, WLAN) scenario. For example, the technical solutions in this application are applicable to an IEEE 802.11 system standard, such as the 802.11a/b/g standard, the 802.11n standard, the 802.11ac standard, the 802.11ax standard, or a next-generation standard thereof, such as the 802.11be standard or a further next-generation standard.

Although this application is mainly described by using an example in which a WLAN network is deployed, especially a network to which the IEEE 802.11 system standard is applied, a person skilled in the art easily understands that various aspects in this application may be extended to other networks that use various standards or protocols, for example, Bluetooth (Bluetooth), a high performance radio local area network (high performance radio local area network, HIPERLAN), a wide area network (wide area network, WAN), a personal area network (personal area network, PAN), and other networks that are known or developed in the future. Therefore, regardless of used coverage and a used wireless access protocol, various aspects provided in this application are applicable to any appropriate wireless network.

The technical solutions of this application may be further applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or new radio (new radio, NR), a 6th generation (6th generation, 6G) system, and a wireless local area network system like an internet of things (internet of things, IoT) network or vehicle-to-everything (vehicle to X, V2X).

The foregoing communication system applicable to this application is only an example for description, and the communication system applicable to this application is not limited thereto. This is uniformly described herein, and details are not described below again.

A terminal device in embodiments of this application may be a user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future 6G network, a terminal device in a public land mobile network (public land mobile network, PLMN), or the like. This is not limited in this application.

A network device in embodiments of this application may be a device configured to communicate with the terminal device. The network device may be a base transceiver station (base transceiver station, BTS) in a GSM system or CDMA, a NodeB (NodeB, NB) in a WCDMA system, an evolutional NodeB (evolutional NodeB, eNB or eNodeB) in an LTE system, or a radio controller in a cloud radio access network (cloud radio access network, CRAN) scenario. Alternatively, the network device may be a relay node, an access point, a vehicle-mounted device, a wearable device, a network device in a 5G network, a network device in a 6G network, a network device in a PLMN network, or the like. This is not limited in this application.

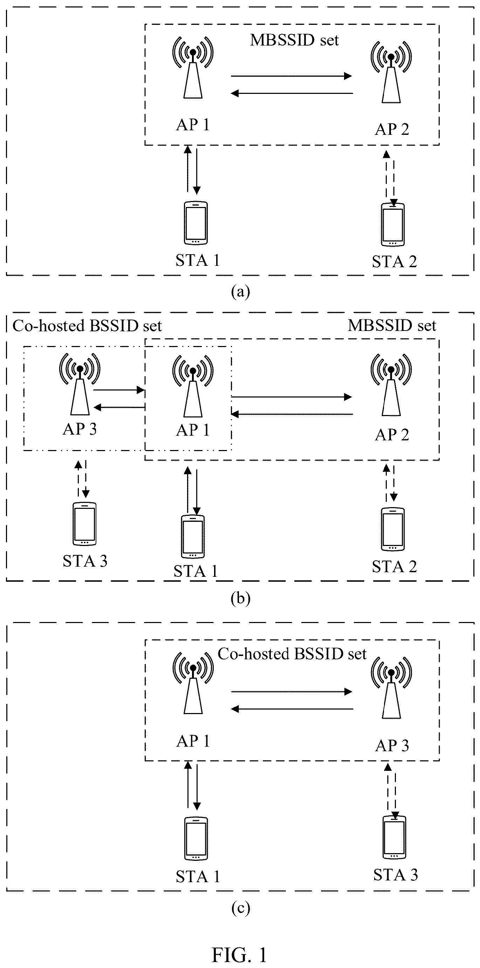

FIG. 1 is a diagram of an application scenario 100 according to an embodiment of this application. In the application scenario 100, an AP may be a communication server, a router, a switch, or any one of the foregoing network devices, and a STA may be a mobile phone, a computer, or any one of the foregoing terminal devices. This is not limited.

It may be understood that, the technical solutions in this application are applicable to communication between an AP and one or more STAs, are also applicable to mutual communication between APs, and are further applicable to mutual communication between STAs. For ease of description, in this application, only an example in which an AP communicates with one or more STAs is used for description. However, the descriptions do not limit the protection scope of this application. This is uniformly described herein, and details are not described below again.

The AP may be an access point used by a terminal device (like a mobile phone) to access a wired (or wireless) network, and is mainly deployed at home, in a building, and in a park. A typical coverage radius is from tens of meters to 100-odd meters. Certainly, the access point may alternatively be deployed outdoors. The AP is equivalent to a bridge that connects a wired network and a wireless network. A main function of the AP is to connect various wireless network clients together and then connect the wireless network to the Ethernet. Specifically, the AP may be a terminal device (such as a mobile phone) or a network device (such as a router) with a Wi-Fi chip. The AP may be a device that supports the 802.11be standard. Alternatively, the AP may be a device that supports a plurality of WLAN standards of the 802.11 family, such as 802.11ax, 802.11ac, 802.11n, 802.11g, 802.11b, 802.11a, and a next generation of 802.11be. The AP in this application may be a high efficiency (high efficiency, HE) AP or an extreme high throughput (extreme high throughput, EHT) AP, or may be an AP applicable to a future-generation Wi-Fi standard.

The STA may be a wireless communication chip, a wireless sensor, a wireless communication terminal, or the like, and may also be referred to as a user. For example, the STA may be a mobile phone, a tablet computer, a set-top box, a smart television, a smart wearable device, a vehicle-mounted communication device, and a computer that supports a Wi-Fi communication function. Optionally, the STA may support the 802.11be standard. Alternatively, the STA may support WLAN standards of the 802.11 family, such as 802.11ax, 802.11ac, 802.11n, 802.11g, 802.11b, 802.11a, and a next generation of 802.11be.

For example, the AP and the STA each may be a device used in the vehicle-to-everything, an internet of things node, a sensor, or the like in the IoT, a smart camera, a smart remote control, or a smart water/electricity meter in a smart home, or a sensor in a smart city.

A wireless communication system provided in this application may be a WLAN or a cellular network. A method may be implemented by a communication device in the wireless communication system or a chip or a processor in a communication device. The communication device may be a wireless communication device that supports parallel transmission on a plurality of links, for example, referred to as a multi-link device (multi-link device) or a multi-band device (multi-band device). Compared with a device that supports only single-link transmission, the multi-link device has higher transmission efficiency and a higher throughput. The multi-link device includes one or more affiliated stations STAs (affiliated STAs). The affiliated STA is a logical station and may work on one link. The affiliated station may be an AP or a non-AP STA. For ease of description, in this application, a multi-link device whose affiliated station is an AP may be referred to as a multi-link AP, a multi-link AP device, or an AP multi-link device (AP multi-link device), and a multi-link device whose affiliated station is a non-AP STA may be referred to as a multi-link STA, a multi-link STA device, or a STA multi-link device (STA multi-link device).

To better understand the technical solutions disclosed in embodiments of this application, the following briefly describes some terms in this application.

### 1. TWT

The TWT is an energy-saving technology defined in Wi-Fi 6. The TWT is to set some periodic time periods, so that some devices only need to remain in an active state in a TWT service period (service period, TWTSP), and can sleep in another time period, to save energy.

TWTs are classified into an individual TWT (individual TWT) and a broadcast TWT (broadcast TWT). In the individual TWT, each STA may separately set up a TWT agreement with an AP, and each STA may have an active time period and a sleep time period of the STA. In the broadcast TWT, an AP establishes a public TWT agreement for a group of STAs, and a plurality of STAs operate in a same active time period and sleep in another time period.

Specifically, in the individual TWT, a TWT requesting station (TWT requesting STA) sends a TWT request message to a TWT responding station (TWT responding STA), to request to set a wake-up time. After receiving the TWT request message, the TWT responding station sends the TWT response message to the TWT requesting station. After interaction succeeds, a TWT agreement is established between the TWT requesting station and the TWT responding station. After the TWT agreement is reached, both the TWT requesting station and the TWT responding station remain in an active state within an agreed-upon period, to send and receive data. Outside the time period, the TWT requesting station may fall asleep to save energy.

Usually, the STA is a TWT requesting station, and the AP is a TWT responding station. The AP may alternatively initiate a TWT agreement establishment request to the STA. This is not limited in embodiments of this application.

Different from the individual TWT, the broadcast TWT provides a "batch management" mechanism. An AP may establish a series of periodic TWTSPs with a plurality of STAs. In the TWTSP, the plurality of STAs need to remain in an active state, to communicate with the AP.

Specifically, the AP may include information about one or more broadcast TWTs in a beacon frame (beacon frame). Each broadcast TWT is jointly represented by a broadcast TWT identifier and a medium access control (medium access control, MAC) address of the AP. After receiving the beacon frame, if the STA intends to join the broadcast TWT, the STA may send a broadcast TWT establishment request message to the AP, to join the broadcast TWT. During establishment of the broadcast TWT, the STA needs to specify a broadcast TWT identifier to request to join a specific broadcast TWT. After joining the broadcast TWT, the STA may be woken up based on a TWTSP indicated by a TWT parameter set, to communicate with the AP. If the STA supports the broadcast TWT but does not explicitly join a broadcast TWT ID, the STA joins, by default, a broadcast TWT whose broadcast TWT ID=0.

Similar to the individual TWT, the parameter set of the broadcast TWT also specifies a wake interval of a TWTSP and duration of each TWTSP. In addition, the broadcast TWT parameters further include a broadcast TWT lifecycle. The broadcast TWT lifecycle is in a unit of a beacon frame interval, and indicates duration of a set-up broadcast TWT.

Based on the TWT mechanism, an RTWT for low-delay service transmission is newly defined in the 802.11be protocol. Specifically, the AP indicates, by setting a broadcast TWT recommendation field to 4, that the broadcast TWT is an RTWT. In addition, a previous extreme high throughput station (previous extreme high throughput station, Pre-EHT STA) or a legacy station (legacy STA) does not recognize the value (that is, 4), and therefore, the previous extreme high throughput station or the legacy station may not attempt to join the broadcast TWT, but may remain silent during the RTWT, and not initiate channel access.

### 2. MBSSID set

The MBSSID is supported in the 802.11 standard, which mainly means that one physical AP may form a plurality of logical APs, to serve different types of STAs. The plurality of logical APs may perform joint management, to reduce management costs.

Specifically, the MBSSID set may be a combination of some cooperative (or logical) APs that use a same operating set, a same channel number, and a same antenna interface. In the MBSSID set (set), one physical AP may be virtualized into a plurality of logical APs, each logical AP manages one BSS, and different logical APs have different BSSIDs. In the plurality of logical APs, a BSSID of one logical AP is configured as a transmitted BSSID, and the logical AP is referred to as a transmitted AP; and a BSSID of a remaining logical AP is configured as a non-transmitted BSSID, and the logical AP is referred to as a non-transmitted AP. BSSID information of the non-transmitted AP may be determined based on an MBSSID element included in a beacon frame, a probe response (probe response) frame, a neighbor report, or another frame sent by the transmitted AP.

Generally, the plurality of APs may alternatively be understood as a plurality of cooperative (or logical) APs obtained through virtualization on one AP, and only the transmitted AP can send a beacon frame and a probe response frame. If a probe request frame (probe request) sent by the STA is destined for an AP whose BSSID is configured as a non-transmitted BSSID in the MBSSID set, the AP whose BSSID is configured as a transmitted BSSID needs to help respond to the probe response frame. In addition, the beacon frame or the probe response frame sent by the transmitted AP includes the MBSSID element. For descriptions of the MBSSID element, refer to Table 1 and Table 2.

**Table 1**

| | Element ID | Length | Maximum BSSID indicator | Subelement |
|---|---|---|---|---|
| Octet | 1 | 1 | 1 | Variable |

As shown in Table 1, the MBSSID element includes an element ID, a length, a maximum BSSID indicator, and a subelement. Specifically, a value (n) of the maximum BSSID indicator field is used to indicate that a maximum quantity of BSSIDs included in the MBSSID set is 2n. The subelement includes non-transmitted BSSID profile (non-transmitted BSSID profile) of each non-transmitted AP. The STA calculates a value of a corresponding non-transmitted BSSID (corresponding to an index of the non-transmitted BSSID) based on a reference BSSID, the maximum BSSID indicator, and an index of the non-transmitted BSSID of each non-transmitted AP.

Each non-transmitted BSSID includes 48 bits. A value of most significant (48-n) bits of each non-transmitted BSSID equals to a value of most significant (48-n) bits of the reference BSSID, and a value of least significant n bits of each non-transmitted BSSID is obtained by performing a modulo operation on a sum of a value of least significant n bits of the reference BSSID and a value of an index of the non-transmitted BSSID by using 2n. The reference BSSID (that is, the transmitted BSSID) is included in a BSSID field in a MAC header of a frame (for example, a beacon frame) including the MBSSID element. For a specific calculation method, refer to the 802.11-2016 standard. Details are not described herein. For descriptions of the sub-element, refer to Table 2.

**Table 2**

| Subelement ID | Name | Extended |
|---|---|---|
| 0 | Non-transmitted BSSID profile | Non-extensible |
| 1-220 | Reserved | |
| 221 | Vendor specific | Vendor defined |
| 222-255 | Reserved | |

As shown in Table 2, the subelement ID being 0 indicates that the subelement includes non-transmitted BSSID profile. The non-transmitted BSSID profile includes elements for one or more APs or directional multi-gigabit (directional multi-gigabit, DMG) STAs that have non-transmitted BSSIDs. The non-transmitted BSSID profile includes but is not limited to the following elements:
(1) a non-transmitted BSSID capability element and another element in the beacon frame;
(2) an SSID element and an MBSSID index element, where the MBSSID index element includes a BSSID index field;
(3) a flexible multicast service (flexible multicast service, FMS) descriptor (descriptor) element (if the beacon frame includes the MBSSID element); and
(4) a non-inheritance (non-inheritance) element (which is an optional element), where the element is the last element in the non-transmitted BSSID profile. The non-inheritance element includes ID numbers and element ID extension numbers of a series of elements that are in the non-transmitted BSSID and that cannot be inherited from the transmitted BSSID, for example, elements such as an element ID, a length, an element ID extension, an element ID list, and an element ID extension list.

It should be noted that, for descriptions of the MBSSID element, refer to descriptions in an existing standard. Details are not described herein.

### 3. Co-hosted BSSID set

Specifically, one physical AP may be virtualized into a plurality of logical APs, and the plurality of logical APs belong to a same co-hosted BSSID set. All the logical APs belonging to the same co-hosted BSSID set share BSSs of a same operating class (operating class), a same channel, a same receive antenna port, and a same transmit antenna port. Different BSSs in the co-hosted BSSID set independently manage their respective BSSs, including sending a beacon frame, sending a probe response frame, and the like.

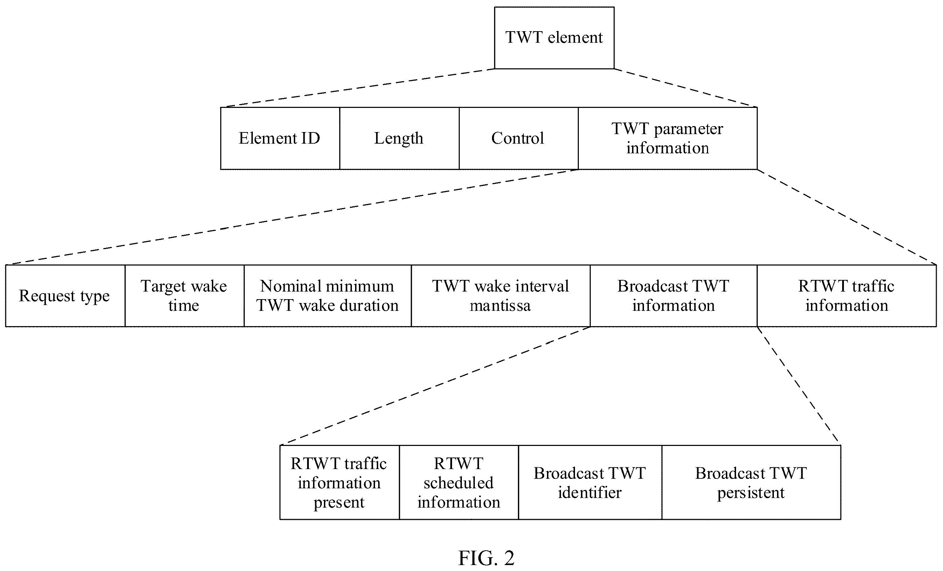

FIG. 2 is a diagram of a frame structure of a TWT element. As shown in FIG. 2, the TWT element includes an element ID (element ID), a length (length), control (control), and TWT parameter information (TWT parameter information). The TWT parameter information includes a request type (request type), a target wake time (target wake time), nominal minimum TWT wake duration (nominal minimum TWT wake duration), a TWT wake interval mantissa (TWT wake interval mantissa), broadcast TWT information (broadcast TWT information), and restricted TWT traffic information (restricted TWT traffic information).

Specifically, the broadcast TWT information includes: restricted TWT traffic information present (restricted TWT traffic information present), restricted TWT scheduled information (restricted TWT scheduled information), a broadcast TWT identifier (broadcast TWT ID), and broadcast TWT persistent (broadcast TWT persistent).

A value of the restricted TWT scheduled information being 2 indicates that RTWT information included in the TWT parameter information belongs to another AP, and the AP and the AP that sends the TWT element belong to a same MBSSID set or a same co-hosted BSSID set. Because the TWT element does not include identification information of the AP corresponding to the RTWT information, the STA cannot determine the AP corresponding to the RTWT information, and therefore cannot properly process the RTWT information.

In view of this, this application provides a wireless communication method and a communication apparatus, so that a station can clearly and efficiently determine RTWT information of an access point.

The following specifically describes an application scenario of embodiments of this application with reference to FIG. 1. It may be understood that this is merely an example for description, and an application scenario of embodiments of this application includes but is not limited thereto.

In (a) in FIG. 1, an AP 1 and an AP 2 belong to a same MBSSID set, the AP 1 is a transmitted AP in the MBSSID set, the AP 2 is a non-transmitted AP in the MBSSID set, and only the AP 1 can communicate with a STA 1 and a STA 2. The STA 1 is a station associated with the AP 1, and the STA 2 is a station associated with the AP 2.

In (b) in FIG. 1, an AP 1 and an AP 2 belong to a same MBSSID set, the AP 1 and an AP 3 belong to a same co-hosted (co-hosted) BSSID set, and each AP in the co-hosted BSSID set has a capability of communicating with a station. A STA 3 is a station associated with the AP 3. The STA 3 receives only a radio frame from the AP 3.

In (c) in FIG. 1, an AP 1 and an AP 3 belong to a same co-hosted BSSID set. A STA 1 is associated with the AP 1, and a STA 3 is associated with the AP 3. For descriptions of the MBSSID set and the co-hosted BSSID set, refer to the following content.

It may be understood that a scenario shown in (a) in FIG. 1 is a scenario in which only an MBSSID set is included, a scenario shown in (b) in FIG. 1 is a hybrid scenario in which an MBSSID set and a co-hosted BSSID set are included, and a scenario shown in (c) in FIG. 1 is a scenario in which only a co-hosted BSSID set is included.

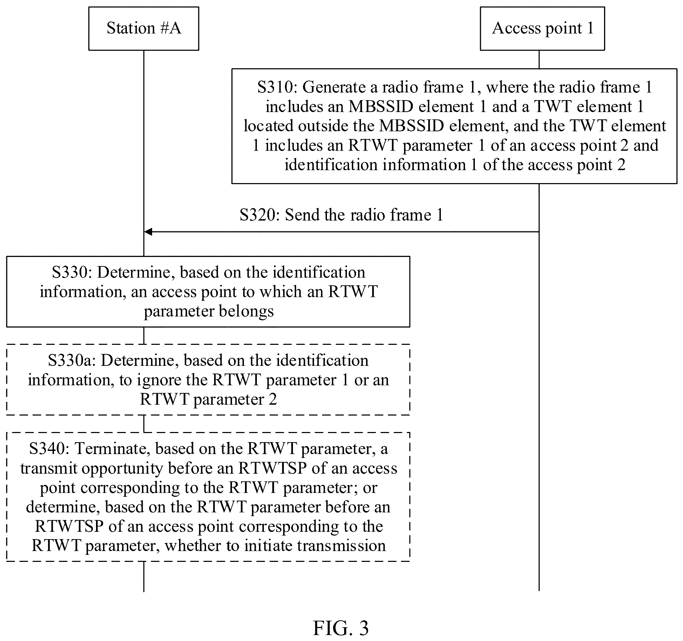

The following describes the communication method in embodiments of this application with reference to FIG. 3.

The method shown in FIG. 3 may be applied to the application scenario 100. Specifically, the method shown in FIG. 3 relates to interaction between the AP 1 (an access point 1 is used as an example below) and the STA (a station is used as an example below). When a TWT element sent by the AP 1 to the STA includes an RTWT parameter of another AP (for example, the AP 2 in (a) in FIG. 1, the AP 2 or the AP 3 in (b) in FIG. 1, or the AP 3 in (c) in FIG. 1), the STA cannot determine an AP corresponding to the RTWT parameter included in the TWT element.

For example, in (a) in FIG. 1, the STA cannot determine whether the RTWT parameter included in the TWT element belongs to the AP 2; in (b) in FIG. 1, the STA cannot determine whether the RTWT parameter included in the TWT element belongs to the AP 2 or the AP 3; and in (c) in FIG. 1, the STA cannot determine whether the RTWT parameter included in the TWT element belongs to the AP 3. In this application, the TWT element includes identification information of the another AP, and the STA may determine, based on the identification information of the another AP, the AP corresponding to the RTWT parameter included in the TWT element. For details, refer to the following content.

FIG. 3 is a diagram of an interaction procedure of a wireless communication method 300 according to an embodiment of this application. The method 300 may be performed by the access point 1 and the station, or may be performed by modules and/or components (for example, a chip or an integrated circuit) that are mounted to the access point 1 and the station and that have corresponding functions. This is not limited.

The following uses the access point 1 and the station 1 to the station 3 as an example for description. For ease of description, in this embodiment of this application, a station #A represents the station 1, the station 2, or a station 3. The method 300 includes the following steps.

S310: The access point 1 (for example, a first access point) generates a radio frame 1.

In this embodiment of this application, the radio frame 1 may be a beacon frame, or may be a probe response frame, or may be a neighbor report frame, or may be a frame type that may be involved in a future standard. This is not limited.

For ease of understanding, S310 is separately described based on different scenarios in this embodiment of this application.

The scenario shown in (a) in FIG. 1 is used as an example.

Specifically, the radio frame 1 includes an MBSSID element 1 and a TWT element 1 located outside the MBSSID element 1. The TWT element 1 includes an RTWT parameter 1 (for example, a first RTWT parameter) of an access point 2 (for example, a second access point) and identification information 1 of the access point 2. There is a correspondence between the identification information 1 and the RTWT parameter 1.

The identification information 1 may be used to determine or indicate that the RTWT parameter 1 belongs to the access point 2. In other words, the identification information 1 can be used to associate the RTWT parameter 1 with the access point 2, so that the station #A (which may be the station 1 or the station 2, where no limitation is imposed) may determine an association relationship between the RTWT parameter 1 and the access point 2 based on the identification information 1.

The access point 1 (the AP 1 shown in (a)) and the access point 2 (the AP 2 shown in (a)) belong to a same MBSSID set, the access point 1 is a transmitted AP, and the access point 2 is a non-transmitted AP. As described above, when the access point 1 is a transmitted AP, the access point 1 may communicate with the station #A (which may be the station 1 or the station 2, where no limitation is imposed). When the beacon frame or the probe response frame is sent, the access point 2 needs to communicate with the station 2 via the access point 1. In other cases, the access point 2 directly communicates with the station 2.

That the TWT element 1 is located outside the MBSSID element 1 may be that the TWT element 1 is not in the MBSSID element 1, or the TWT element 1 exists independently of the MBSSID element 1, or the TWT element 1 does not belong to the MBSSID element 1. The MBSSID element 1 corresponds to the MBSSID set to which the access point 1 and the access point 2 belong.

In a possible implementation, the MBSSID element 1 does not include an RTWT parameter 2 of the access point 2, and the RTWT parameter 2 is the same as the RTWT parameter 1. In this way, overheads and air interface duration occupied by the radio frame 1 can be effectively reduced. Therefore, the station #A (which may be the station 1 or the station 2, where no limitation is imposed) does not need to repeatedly process the RTWT parameter of the access point 2. This helps reduce power consumption of the station #A.

In this embodiment of this application, that "the RTWT parameter 2 is the same as the RTWT parameter 1" may be that the RTWT parameter 2 and the RTWT parameter 1 indicate a same RTWT agreement, or the RTWT parameter 2 and the RTWT parameter 1 indicate a same group of RTWT time periods, or the RTWT parameter 2 and the RTWT parameter 1 indicate same RTWT scheduled information (RTWT Schedule), or the like.

In a possible implementation, the MBSSID element 1 includes the RTWT parameter 2 of the access point 2, and the identification information 1 indicates to ignore the RTWT parameter 1 or the RTWT parameter 2. Because the radio frame 1 includes the RTWT parameter 1 and the RTWT parameter 2, the identification information 1 is included in the TWT element 1, so that the station #A (which may be the station 1 or the station 2, where no limitation is imposed) does not need to repeatedly process the RTWT parameter 2 in the MBSSID element 1, and this helps reduce power consumption and processing duration of the station #A (which may be the station 1 or the station 2, where no limitation is imposed); or the station #A (which may be the station 1 or the station 2, where no limitation is imposed) does not need to repeatedly process the RTWT parameter 1 in the TWT element 1, and this helps reduce power consumption and processing duration of the station #A (which may be the station 1 or the station 2, where no limitation is imposed).

Further, when the MBSSID element 1 includes the RTWT parameter 2, in an implementation, it is predefined in the protocol that the TWT element 1 including the identification information 1 indicates to ignore the RTWT parameter 1, so that the station #A (which may be the station 1 or the station 2, where no limitation is imposed) ignores the RTWT parameter 1 based on a protocol predefinition. In another implementation, it is predefined in the protocol that the TWT element 1 including the identification information 1 indicates to ignore the RTWT parameter 2, so that the station #A (which may be the station 1 or the station 2, where no limitation is imposed) ignores the RTWT parameter 2 based on a protocol predefinition. In still another implementation, it is predefined in the protocol that the TWT element 1 including the identification information 1 indicates to ignore either of the RTWT parameter 1 and the RTWT parameter 2, so that the station #A (which may be the station 1 or the station 2, where no limitation is imposed) determines to ignore either of the RTWT parameter 1 and the RTWT parameter 2.

When the identification information 1 indicates to ignore the RTWT parameter 1, the station #A (which may be the station 1 or the station 2, where no limitation is imposed) may obtain richer RTWT information of the access point 2 from BSSID profile of the access point 2 included in the MBSSID element 1. When the identification information 1 indicates to ignore the RTWT parameter 2, BSSID profile included in the MBSSID element 1 includes more RTWT information of the access points 2. This helps the station #A reduce power consumption.

In a possible implementation, the identification information 1 includes a BSSID index or a first value. The BSSID index is a BSSID index value of the access point 2 in the MBSSID set.

Specifically, the first value may be used to identify the access point 2. For example, the first value is 0, and 0 is a predefined value. The access point 2 may be identified by using a predefined value 0 in the protocol. The first value may alternatively be an example of the BSSID index value. For example, the first value is a BSSID index value whose value is 0; or the first value is a BSSID index value whose value is not 0 and that currently has no specific meaning. This is not limited.

In a possible implementation, when the TWT element 1 includes the first value, the station #A (which may be the station 1 or the station 2, where no limitation is imposed) may determine, based on the first value, that the access point 2 and the access point 1 belong to a same MBSSID set. Further, the station #A (which may be the station 1 or the station 2, where no limitation is imposed) may determine or distinguish the access point 2 based on a specific value of the first value. When the first value cannot be used to distinguish the access point 2, in this application, the station #A (which may be the station 1 or the station 2, where no limitation is imposed) can determine or distinguish the access point 2 with reference to the first value and another parameter or method.

In a possible implementation, in this application, a specific value of the first value used to distinguish the access point 2 is predefined in the protocol. The station #A (which may be the station 1 or the station 2, where no limitation is imposed) may distinguish the access point 2 based on the specific value of the first value.

In a possible implementation, when the TWT element 1 includes the BSSID index of the access point 2, the BSSID index of the access point 2 may alternatively be represented as an index of the BSSID of the access point 2 in the MBSSID set, and the index may uniquely identify the access point 2. In addition, the BSSID index of the access point 2 may alternatively be represented as an index of the BSSID described in Table 1, and can uniquely identify the access point 2.

That the TWT element 1 includes the BSSID index of the access point 2 helps implement compatibility with an existing frame structure. The first value is included in the TWT element 1. This helps reduce signaling overheads.

In a possible implementation, the identification information 1 may further include a MAC address of the access point 2, a device identifier of the access point 2, or the like. The foregoing information can identify the access point 2.

According to the foregoing technical solution, the station #A (which may be the station 1 or the station 2, where no limitation is imposed) determines, based on the identification information 1, that the RTWT parameter 1 belongs to the access point 2.

The scenario shown in (b) in FIG. 1 is used as an example.

Specifically, the radio frame 1 includes an MBSSID element 1 and a TWT element 1. In addition to identification information 1 and an RTWT parameter 1, the TWT element 1 further includes identification information 2 of an access point 3 (the AP 3 shown in (b) in FIG. 1) and an RTWT parameter 3 (for example, a third RTWT parameter) of the access point 3. For descriptions of the identification information 1 in this scenario, refer to the foregoing descriptions. Details are not described again.

In a possible implementation, the identification information 2 is set to a second value, and the value is zero, to indicate that the access point 3 and the access point 1 belong to a same co-hosted BSSID set.

In a possible implementation, in this application, a specific value of the second value used to identify the access point 3 is predefined in the protocol. In addition to indicating that the access point 3 and the access point 1 belong to the same co-hosted BSSID set, the station #A (which may be the station 1 or the station 2, where no limitation is imposed) may further determine the access point 3 based on the specific value of the second value.

In a possible implementation, when the station #A (which may be the station 1 or the station 2, where no limitation is imposed) determines, based on the second value, that the RTWT parameter 3 belongs to an access point in a same co-hosted BSSID set as the access point 1, the station #A (which may be the station 1 or the station 2, where no limitation is imposed) may determine, based on another method or parameter, the access point corresponding to the RTWT parameter 3.

In a possible implementation, when the station #A (which may be the station 1 or the station 2, where no limitation is imposed) determines, based on the second value, that the access point 3 and the access point 1 belong to a same co-hosted BSSID set, the station (which may be the station 1 or the station 2, where no limitation is imposed) may further determine, based on the second value, that the RTWT parameter 3 does not belong to the access point 1, but belongs to an access point (namely, the access point 3) in the same co-hosted BSSID set as the access point 1. For descriptions of the second value, refer to descriptions of the first value. Details are not described again.

In a possible implementation, the identification information 2 may further include a MAC address of the access point 3, a device identifier of the access point 3, or the like. The foregoing information can indicate that the access point 3 and the access point 1 belong to the same co-hosted BSSID set and is used to distinguish the access point 3.

It is assumed that the access point 3 and the access point 1 do not belong to a same co-hosted BSSID set. Similar to the access point 2, the access point 3 belongs to a same MBSSID set as the access point 1. In this case, the station #A processes the access point 3 and the access point 2 in a same manner.

In a possible implementation, when the TWT element 1 includes the second value and the first value, the second value is different from the first value. In this way, the station #A (which may be the station 1 or the station 2, where no limitation is imposed) can distinguish the access point 2 and the access point 3 based on the specific value of the first value and the specific value of the second value.

In an example, when the identification information 1 is the first value, the first value may be 0, and the second value is not 0. When the identification information 1 is a BSSID index, the identification information 2 is the second value, and the second value is not limited.

In a possible implementation, in this application, the first value and the second value used for distinguishing or identifying the access point 2 and the access point 3 is predefined in the protocol. Therefore, the station #A (which may be the station 1 or the station 2, where no limitation is imposed) may determine a corresponding access point based on the specific value of the first value and the specific value of the second value that are included in the TWT element.

It should be noted that when the TWT element 1 includes only the identification information 1, if the identification information 1 is the first value, the first value is not limited.

In a possible implementation, when the TWT element 1 includes the identification information 1 and the identification information 2, the identification information 1 and the identification information 2 are respectively located in different fields of TWT parameter information. For example, the identification information 1 is located in a field 1 of the TWT parameter information in the TWT element 1, and the identification information 2 is located in a field 2 of the TWT parameter information in the TWT element 1. When the TWT parameter information includes both the identification information 1 and the identification information 2, the station #A (which may be the station 1 or the station 2, where no limitation is imposed) may distinguish, based on different fields, that the identification information 1 indicates whether the access point 2 and the access point 1 belong to a same MBSSID set, and the identification information 2 indicates whether the access point 3 and the access point 1 belong to a same co-hosted BSSID set. The identification information 1 and the identification information 2 are distinguished by using different fields of the TWT parameter information. The first value indicating the identification information 1 may be the same as or different from the second value indicating the identification information 2.

According to the foregoing technical solution, the station #A (which may be the station 1 or the station 2, where no limitation is imposed) determines, based on the identification information 1, that the RTWT parameter 1 belongs to the access point 2, and determines, based on the identification information 2, that the access point 3 and the access point 1 belong to the same co-hosted BSSID set. In addition, the station #A (which may be the station 1 or the station 2, where no limitation is imposed) can read the RTWT parameter 3 via the TWT element 1, and the MBSSID element 1 includes no RTWT parameter 3.

The scenario shown in (c) in FIG. 1 is used as an example.

Specifically, the radio frame 1 does not include an MBSSID element 1, the TWT element 1 includes only identification information 2 and an RTWT parameter 3, and the station #A (which is the station 1) determines, based on the identification information 2, that the RTWT parameter 3 belongs to the access point 3; or determines that the RTWT parameter 3 does not belong to the access point 1.

For descriptions of the identification information 2, refer to descriptions of the scenario in (b) in FIG. 1. Details are not described again.

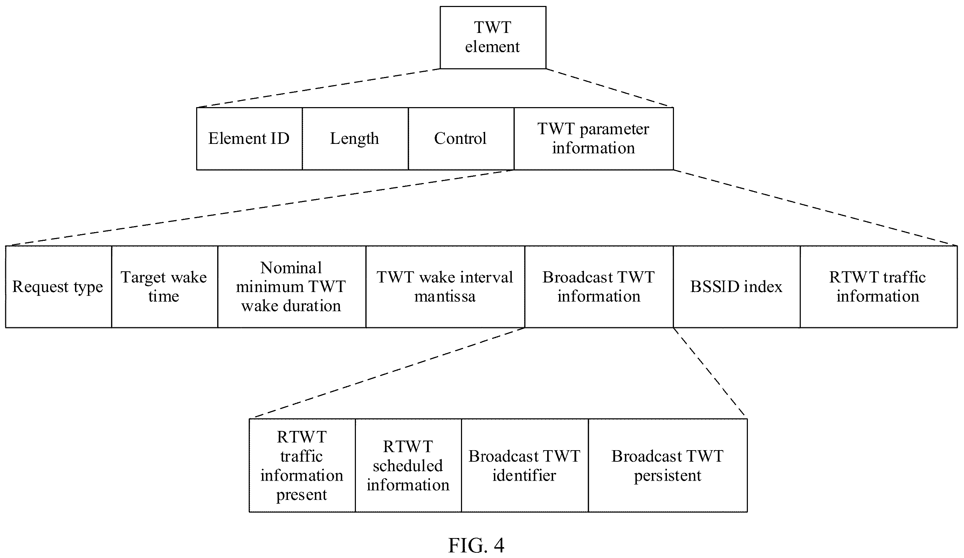

For descriptions of the TWT element 1, refer to FIG. 4 to FIG. 6.

FIG. 4 is a diagram of a frame structure of a TWT element 1 according to an embodiment of this application. As shown in FIG. 4, the TWT element 1 includes an element ID, a length, control, and TWT parameter information. The TWT parameter information includes a request type field, a target wake time field, a nominal minimum TWT wake duration field, a TWT wake interval mantissa field, a broadcast TWT information field, a restricted TWT traffic information field, and a basic service set identifier index (BSSID index) field. For descriptions of the broadcast TWT information, refer to FIG. 2.

The identification information (the identification information 1 and/or the identification information 2) may be included in the BSSID index field. All information of the identification information (the identification information 1 and/or the identification information 2) is included in the BSSID index field, or a part of the identification information (the identification information 1 and/or the identification information 2) is included in the BSSID index field.

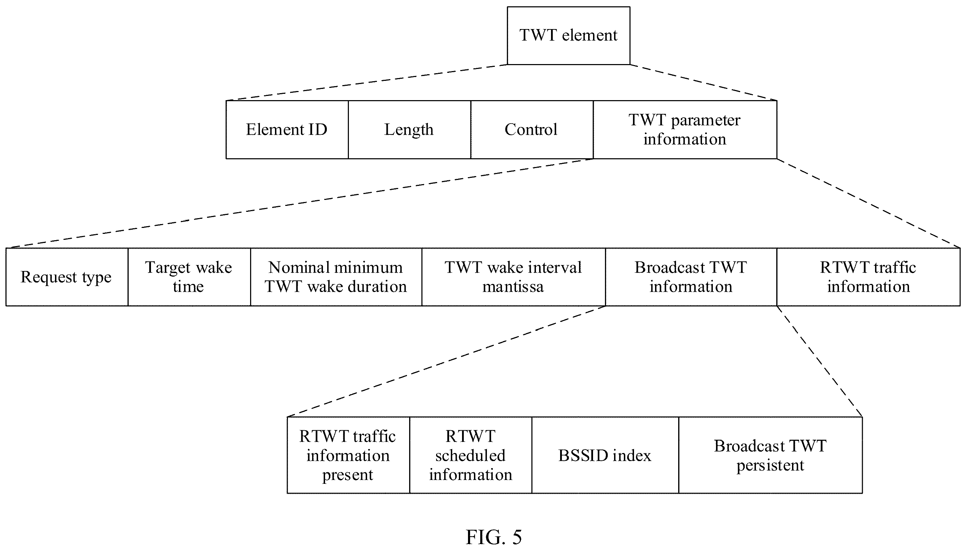

FIG. 5 is a diagram of another frame structure of a TWT element 1 according to an embodiment of this application. As shown in FIG. 5, the TWT element 1 includes an element ID, a length, control, and TWT parameter information. For descriptions of the TWT parameter information and broadcast TWT information, refer to FIG. 2. Details are not described herein again. The identification information (the identification information 1 and/or the identification information 2) is included in a broadcast TWT ID. The TWT parameter information does not include a newly added field.

Specifically, the broadcast TWT ID does not include valid information (because the RTWT parameter is used by a STA in another cell to perform transmit opportunity (transmit opportunity, TXOP) termination (termination)), and the identification information (the identification information 1 and/or the identification information 2) may be included in the broadcast TWT ID.

In a possible implementation, because a length of the broadcast TWT ID is 5 bits, the broadcast TWT ID may include least significant 5 bits of the BSSID index of the access point 2. When a value of the maximum BSSID indicator (as shown in Table 1) in the MBSSID element 1 is less than or equal to 5, most significant 3 bits of a BSSID index of each non-transmitted AP in the MBSSID set are always 0, so that the least significant 5 bits can include a value. This may not cause ambiguity. When a value of the maximum BSSID indicator is greater than 5, the station #A (which may be the station 1 or the station 2, where no limitation is imposed) may ignore the broadcast TWT ID, or determine, by using another algorithm, whether the RTWT parameter 1 belongs to the access point 2.

In a possible implementation, if the value of the broadcast TWT ID is the same as the value of the least significant 5 bits of the BSSID index of the access point 2, the station #A (which may be the station 1 or the station 2, where no limitation is imposed) determines, on this basis, that the RTWT parameter 1 belongs to the access point 2, so that the station #A ignores the RTWT parameter 1, and only reads the RTWT parameter 2, to implement efficient information reading.

In a possible implementation, if the value of the broadcast TWT ID is the same as the value of the least significant 5 bits of the BSSID index of the access point 2, the station #A (which may be the station 1 or the station 2, where no limitation is imposed) determines, on this basis, that the RTWT parameter 1 belongs to the access point 2, so that the station #A ignores the RTWT parameter 2, and only reads the RTWT parameter 1, to implement efficient information reading.

The broadcast TWT ID shown in FIG. 5 may alternatively be replaced with a BSSID index subfield. The identification information (the identification information 1 and/or the identification information 2) may be included in the BSSID index subfield.

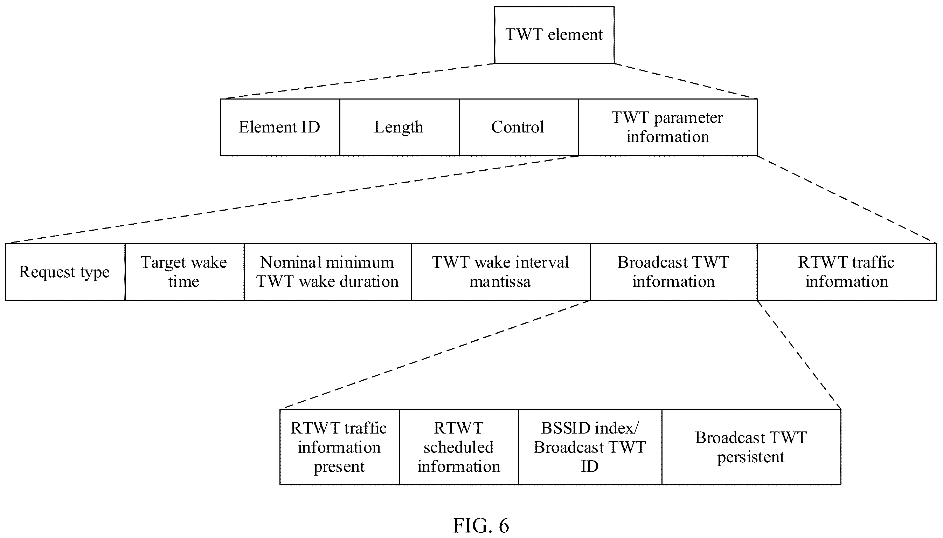

FIG. 6 is a diagram of still another frame structure of a TWT element 1 according to an embodiment of this application. As shown in FIG. 6, the TWT element 1 includes an element ID, a length, control, and TWT parameter information. Broadcast TWT information includes: restricted TWT traffic information present, restricted TWT scheduled information, a broadcast TWT ID/basic service set identifier index subfield, and broadcast TWT persistent. The identification information (the identification information 1 and/or the identification information 2) is included in the broadcast TWT ID/BSSID index subfield. The TWT parameter information does not include a newly added field.

When the TWT element 1 includes RTWT information of the access point 1 (when a value of the RTWT scheduled information is not 2), the broadcast TWT information includes the broadcast TWT ID. When the TWT element 1 includes RTWT information of another access point (when a value of the RTWT scheduled information is 2), the broadcast TWT information includes the BSSID index subfield.

In a possible implementation, in FIG. 4 to FIG. 6, when a value of a negotiation type (Negotiation Type) in the request type is 2, and a value of the restricted TWT scheduled information is 3, the BSSID index field is included at a location originally used to include the nominal minimum TWT wake duration. When the value of the negotiation type in the request type is 2 and the value of the restricted TWT scheduled information is 3, the BSSID index subfield (or a part of the BSSID index subfield) is included at a location originally used to include the broadcast TWT ID, the BSSID index subfield is used to include the identification information (the identification information 1 and/or the identification information 2). All information of the identification information (the identification information 1 and/or the identification information 2) is included in the BSSID index subfield, or a part of the identification information (the identification information 1 and/or the identification information 2) is included in the BSSID index subfield. When the TWT element 1 includes both the identification information 1 and the identification information 2, the identification information 1 and the identification information 2 are respectively located in different fields.

In this embodiment of this application, the RTWT parameter (the RTWT parameter 1 and the RTWT parameter 3 are not distinguished) includes a target wake time, nominal minimum TWT wake duration, a TWT wake interval mantissa, and a TWT wake interval exponent included in the request type.

S320: The access point 1 sends the radio frame 1 to the station #A.

Correspondingly, the station #A receives the radio frame 1 from the access point 1.

Specifically, the access point 1 broadcasts the radio frame 1 to a plurality of stations. The plurality of stations include the station 1, or may include the station 2, or may include the station 3. For ease of description, the station #A represents the station 1, or the station 2, or the station 3 below. The station 3 may not receive the radio frame 1 from the access point 1. Correspondingly, the station 3 does not need to process the radio frame 1.

The following shows corresponding steps and the method implemented on the station side.

S330: The station #A determines, based on the identification information, an access point to which the RTWT parameter belongs.

For ease of understanding, S330 is separately described based on different scenarios in this embodiment of this application. In different scenarios, the station #A represents different stations. For ease of understanding, the station #A is no longer used in the following descriptions of S330, but a specific station is used as an example for description.

The scenario shown in (a) in FIG. 1 is used as an example.

Specifically, the radio frame 1 includes the MBSSID element 1 and the TWT element 1, and the TWT element 1 includes the identification information 1 and the RTWT parameter 1. After receiving the radio frame 1, in addition to obtaining the RTWT parameter of the access point 1 (the parameter may be located in another part of the radio frame 1, and this is not limited), the station 1 can further determine, based on the identification information 1, that the access point 2 and the access point 1 belong to a same MBSSID set, to further determine that the RTWT parameter 1 belongs to the access point 2. After receiving the radio frame 1, the station 2 can determine, based on the identification information 1, that the access point 2 and the access point 1 belong to the same MBSSID set, to further determine that the RTWT parameter 1 belongs to the access point 2. When the value of the restricted TWT scheduled information in the TWT element 1 is 2, the identification information 1 is included in the TWT element 1, so that either of the station 1 and the station 2 can determine, based on the identification information 1, that the RTWT parameter 1 belongs to the access point 2, to further process the RTWT parameter 1, for example, determine whether to join an RTWT agreement corresponding to the RTWT parameter 1, or terminate transmission.

The scenario shown in (b) in FIG. 1 is used as an example.

Specifically, the radio frame 1 includes the MBSSID element 1 and the TWT element 1. In addition to the identification information 1 and the RTWT parameter 2, the TWT element 1 further includes the identification information 2 and the RTWT parameter 3. In addition to obtaining the RTWT parameter of the access point 1, the station 1 can further determine, based on the identification information 1, that the access point 2 and the access point 1 belong to a same MBSSID set, to further determine that the RTWT parameter 1 belongs to the access point 2. Further, the station 1 determines, based on the identification information 2, that the access point 3 and the access point 1 belong to a same co-hosted BSSID set. Further, the station 1 may determine, based on the identification information 2 or with reference to other information, that the RTWT parameter 3 belongs to the access point 3. The MBSSID element 1 includes no RTWT parameter belonging to the access point in the co-hosted BSSID set. Therefore, the station 1 determines that there is no need to further parse the MBSSID element 1 to obtain the RTWT parameter information of the access point 3.

Similarly, after receiving the radio frame 1, the station 2 can determine, based on the identification information 1, that the access point 2 and the access point 1 belong to the same MBSSID set, to further determine that the RTWT parameter 1 belongs to the access point 2. Further, the station 2 determines, based on the identification information 2, that the access point 3 and the access point 1 belong to the same co-hosted BSSID set. Further, the station 2 may determine, based on the identification information 2 or with reference to other information, that the RTWT parameter 3 in the TWT element 1 belongs to the access point 3. In this case, the MBSSID element 1 includes no RTWT parameter belonging to the access point in the co-hosted BSSID set. Therefore, the station 2 determines that there is no need to further parse the MBSSID element 1 to obtain the RTWT parameter information of the access point 3.

Because the BSSID corresponding to the radio frame 1 sent by the access point 1 is different from the BSSID of the access point 3, the station 3 may not receive the radio frame 1 from the access point 1.

When the value of the restricted TWT scheduled information in the TWT element 1 is 2, the identification information 1 and the identification information 2 are included in the TWT element 1, so that either of the station 1 and the station 2 can determine, based on the identification information 1, that the RTWT parameter 1 belongs to the access point 2, and determine, based on the identification information 2, that the RTWT parameter belongs to the access point 3, to further process the RTWT parameter 1 and the RTWT parameter 3.

The scenario shown in (c) in FIG. 1 is used as an example.

Specifically, the radio frame 1 includes only the TWT element 1, and does not include the MBSSID element 1. The station 1 determines, based on the identification information 2, that the access point 3 and the access point 1 belong to a same co-hosted BSSID set. Further, the station 1 may determine, based on the identification information 2 or with reference to other information, that the RTWT parameter 3 belongs to the access point 3. In this case, the MBSSID element 1 includes no RTWT parameter belonging to the access point in the co-hosted BSSID set. Therefore, the station 1 determines that there is no need to further parse the MBSSID element 1 to obtain the RTWT parameter information of the access point 3.

Because the BSSID corresponding to the radio frame 1 sent by the access point 1 is different from the BSSID of the access point 3, the station 3 may not receive the radio frame 1 from the access point 1. When the value of the restricted TWT scheduled information in the TWT element 1 is 2, the identification information 2 is included in the TWT element 1, so that the station 1 can determine, based on the identification information 2, that the RTWT parameter 3 belongs to the access point 3, to further process the RTWT parameter 3.

In conclusion, the identification information of the another AP is included in the TWT element. When the TWT element includes the RTWT parameter of the another AP, the station may determine, based on the identification information of the another AP included in the TWT element, the AP corresponding to the RTWT parameter included in the TWT element. This helps the station further process the RTWT parameter of the another AP included in the TWT element.

In the scenarios shown in (a) and (b) in FIG. 1, when the MBSSID element 1 includes the RTWT parameter 2, the method 300 may further include the following step.

S330a: The station #A determines, based on the identification information, to ignore the RTWT parameter 1 or the RTWT parameter 2.

An example in which the station #A is the station 1 is used for description. When the station 1 determines (determines in a manner of predefining in the protocol, or determines by the station 1, which is not limited) to ignore the RTWT parameter 1, the station 1 may obtain richer RTWT information of the access point 2 from the BSSID profile of the access point 2 included in the MBSSID element 1. When the station 1 determines to ignore the RTWT parameter 2, the BSSID profile included in the MBSSID element 1 includes more RTWT information of the access point 2. This helps the station 1 reduce processing power consumption.

Similarly, an example in which the station #A is the station 2 is used for description. When the station 2 determines to ignore the RTWT parameter 1, the station 2 may obtain richer RTWT information of the access point 2 from the BSSID profile of the access point 2 included in the MBSSID element 1. When the station 2 determines to ignore the RTWT parameter 2, the BSSID profile included in the MBSSID element 1 includes more RTWT information of the access point 2. This helps the station 2 reduce processing power consumption.

In a possible implementation, the method 300 may further include the following step.

S340: The station #A terminates a transmit opportunity based on the RTWT parameter before an RTWTSP of the access point corresponding to the RTWT parameter; or the station #A determines, based on the RTWT parameter before an RTWTSP of the access point corresponding to the RTWT parameter, whether to initiate transmission.

For ease of understanding, S340 is separately described based on different scenarios in this embodiment of this application. In different scenarios, the station #A represents different stations. For ease of understanding, the station #A is no longer used in the following descriptions of S340, but a specific station is used for description.

The scenario shown in (a) in FIG. 1 is used as an example.

Specifically, the station 1 reads the RTWT parameter (the RTWT parameter 1 and the RTWT parameter 2 are not distinguished) of the access point 2 in the foregoing method. Then, if the station 1 obtains the TXOP before the RTWTSP of the access point 2, the TXOP needs to be terminated before the RTWTSP of the access point 2. In addition, when the station 1 backs off to 0 through channel contention before the RTWTSP of the access point 2, the station 1 also needs to determine, before the RTWTSP of the access point 2, whether there is an enough time for transmission. If the time is not enough, the station 1 does not initiate transmission. In this way, interference may not be caused to low-delay service transmission of the access point 2.

Similarly, the station 2 reads the RTWT parameter (the RTWT parameter 1 and the RTWT parameter 2 are not distinguished) of the access point 2 in the foregoing method. Then, if the station 2 obtains the TXOP before the RTWTSP of the access point 2, the TXOP needs to be terminated before the RTWTSP of the access point 2. In addition, when the station 2 backs off to 0 through channel contention before the RTWTSP of the access point 2, the station 2 also needs to determine, before the RTWTSP of the access point 2, whether there is an enough time for transmission. If the time is not enough, the station 2 does not initiate transmission. In this way, interference may not be caused to low-delay service transmission of the access point 2. In addition, the station 2 may also determine whether the station 2 needs to join the RTWT agreement corresponding to the RTWT parameter.

The scenario shown in (b) in FIG. 1 is used as an example.

Specifically, the station 1 reads an RTWT parameter of an access point #a (corresponding to the access point 2 and/or the access point 3) in the foregoing method. Then, if the station 1 obtains the TXOP before an RTWTSP of the access point #a, the TXOP needs to be terminated before the RTWTSP of the access point #a. In addition, when the station 1 backs off to 0 through channel contention before the RTWTSP of the access point #a, the station 1 also needs to determine, before the RTWTSP of the access point #a, whether there is an enough time for transmission. If the time is not enough, the station 1 does not initiate transmission. In this way, interference may not be caused to low-delay service transmission of the access point #a.

Similarly, the station 2 reads the RTWT parameter of the access point #a in the foregoing method. Then, if the station 2 obtains the TXOP before the RTWTSP of the access point #a, the TXOP needs to be terminated before the RTWTSP of the access point #a. In addition, when the station 2 backs off to 0 through channel contention before the RTWTSP of the access point #a, the station 2 also needs to determine, before the RTWTSP of the access point #a, whether there is an enough time for transmission. If the time is not enough, the station 2 does not initiate transmission. In this way, interference may not be caused to low-delay service transmission of the access point #a. In addition, the station 2 may also determine whether the station 2 needs to join an RTWT agreement corresponding to the RTWT parameter of the access point 2.

The scenario shown in (c) in FIG. 1 is used as an example.

For a processing action of the station 1, refer to the foregoing descriptions. Details are not described again.

In conclusion, according to the foregoing technical solution, in this application, the station #A may not cause interference to low-delay service transmission of the access point whose RTWT parameter is read.

The following describes another communication method in embodiments of this application with reference to other accompanying drawings.

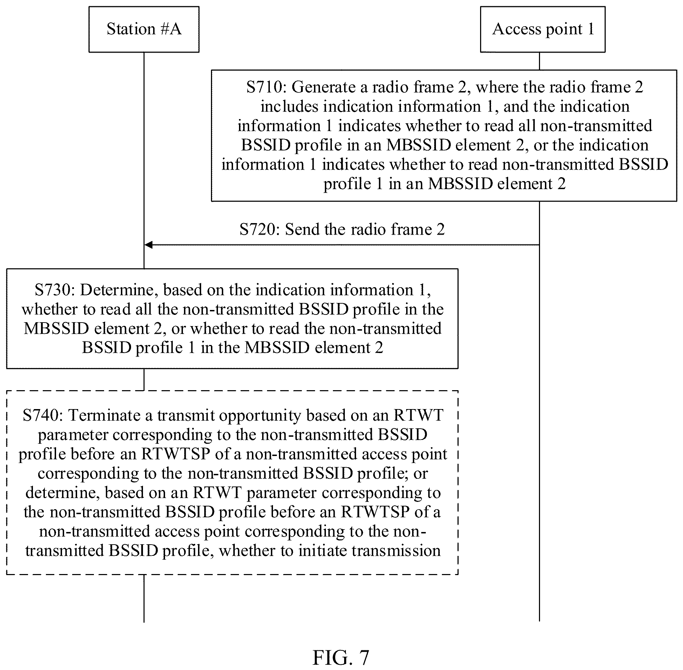

The method shown in FIG. 7 may be applied to the scenarios shown in (a) and (b) in FIG. 1. Specifically, the method shown in FIG. 7 relates to interaction between the AP 1 and a STA. When a piece of non-transmitted BSSID profile in an MBSSID element sent by the AP 1 to the STA does not include RTWT information of an AP (for example, the AP 2 in (a) in FIG. 1 or the AP 2 in (b) in FIG. 1), if the STA reads the BSSID profile, the STA cannot obtain RTWT information corresponding to the BSSID profile, causing unnecessary energy consumption of the STA.

In this application, the indication information is included, and the STA may determine, based on the indication information, whether to read the non-transmitted BSSID profile in the MBSSID element, to reduce unnecessary energy consumption of the STA. For details, refer to the following content.

FIG. 7 is a diagram of an interaction procedure of a communication method 700 according to an embodiment of this application. The method 700 may be performed by the access point 1 and the station, or may be performed by modules and/or components (for example, a chip or an integrated circuit) that are mounted to the access point 1 and the station and that have corresponding functions. This is not limited. In this embodiment of this application, the access point sends indication information to the station, to indicate whether the station reads the non-transmitted BSSID profile in the MBSSID element, so that the station can determine in advance whether the MBSSID element needs to be processed. The following uses the access point 1, the station 1, and the station 2 as an example for description. For ease of description, in this embodiment of this application, a station #A represents the station 1 or the station 2. The method 700 includes the following steps.

S710: The access point 1 generates a radio frame 2.

In this embodiment of this application, the radio frame 2 may be a beacon frame, or may be a probe response frame, or may be a neighbor report frame, or may be a frame type that may be involved in a future standard. This is not limited.

Specifically, the radio frame 2 includes indication information 1, and the indication information 1 indicates whether to read all non-transmitted BSSID profile in an MBSSID element 2; or the indication information 1 indicates whether to read non-transmitted BSSID profile 1 (for example, first non-transmitted BSSID profile) in an MBSSID element 2. The access point 1 and a non-transmitted access point corresponding to the non-transmitted BSSID profile belong to a same MBSSID set.

Specifically, that the indication information 1 indicates whether the station #A reads all the non-transmitted BSSID profile in the MBSSID element 2 may be represented as follows: The indication information 1 corresponds to all the non-transmitted BSSID profile in the MBSSID element 2. That the indication information 1 indicates whether the station #A reads the non-transmitted BSSID profile 1 in the MBSSID element 2 may be represented as follows: The indication information 1 corresponds to the non-transmitted BSSID profile 1 in the MBSSID element 2.

In a possible implementation, when the indication information 1 corresponds to all the non-transmitted BSSID profile in the MBSSID element 2, the indication information 1 may be located outside the MBSSID element 2. For example, the indication information 1 may be located in the foregoing TWT element 1 (for example, a broadcast TWT ID or nominal minimum TWT wake duration, or another reserved bit (reserved bit)), or located in a newly defined information element (different from the TWT element 1). Alternatively, the indication information 1 may be located in the MBSSID element 2, for example, located in idle bits (for example, a 1^{st} bit 1 to a 220^{th} bit) that are not used and that are in the subfield described in Table 1, or a bit in the most significant 4 bits of the maximum BSSID indicator field.

When the indication information 1 indicates whether the station #A reads all the non-transmitted BSSID profile in the MBSSID element 2, the indication information 1 includes at least one bit, for example, one bit. A value of the bit being 1 indicates to read all the non-transmitted BSSID profile in the MBSSID element 2. A value of the bit being 0 indicates not to read all the non-transmitted BSSID profile in the MBSSID element 2.

In a possible implementation, when the indication information 1 corresponds to the non-transmitted BSSID profile 1 in the MBSSID element 2, the indication information 1 may alternatively be located outside the MBSSID element 2, or may be located inside the MBSSID element 2. In an example, the TWT element 1 includes a bitmap (bitmap) (which may be a newly added field), and each bit in the bitmap corresponds to one piece of non-transmitted BSSID profile in the MBSSID element 2. In another example, the idle bits that are not used and that are in the subfield include a bitmap, and each bit in the bitmap corresponds to one piece of non-transmitted BSSID profile in the MBSSID element 2. In another example, each piece of non-transmitted BSSID profile in the MBSSID element 2 includes corresponding indication information 1. Each piece of indication information 1 may include one or more bits.

In a possible implementation, in this application, a new information element (different from the TWT element 1) can also be defined, and the information element is used to include the bitmap.

It should be noted that, when the indication information 1 is located in the MBSSID element 2, in this application, the station #A may independently process the MBSSID element 2. When the indication information 1 is located outside the MBSSID element, in this application, the station #A can determine in advance whether the MBSSID element 2 needs to be processed.

S720: The access point 1 sends the radio frame 2 to the station #A.

Correspondingly, the station #A receives the radio frame 2 from the access point 1.

Specifically, the access point 1 broadcasts the radio frame 2 to a plurality of stations. The plurality of stations include the station 1, or may include the station 2. For ease of description, the station 1 and the station 2 are collectively referred to the station #A below.

S730: The station #A determines, based on the indication information 1, whether to read all the non-transmitted BSSID profile in the MBSSID element 2, or whether to read the non-transmitted BSSID profile 1 in the MBSSID element 1.

For ease of understanding, S730 is separately described based on different scenarios in this embodiment of this application. In different scenarios, the station #A represents different stations. For ease of understanding, the station #A is no longer used in the following descriptions of S730, but a specific station is used for description.

The scenario shown in (a) in FIG. 1 is used as an example.

Specifically, the station 1 determines, based on the indication information 1 in the radio frame 2, whether to read all the non-transmitted BSSID profile or the non-transmitted BSSID profile 1 in the MBSSID element 2. Specifically, when a part of the non-transmitted BSSID profile in the MBSSID element 2 does not include RTWT information, the station 2 cannot obtain any useful information by reading the part of the non-transmitted BSSID profile, causing unnecessary energy consumption. In this way, the indication information 1 is included in the radio frame 2, and the indication information 1 indicates not to read all the non-transmitted BSSID profile in the MBSSID element 2. This can effectively avoid an unnecessary operation of the station 1.

Similarly, the station 2 may also determine, based on an indication of the indication information 1, whether to read all the non-transmitted BSSID profile or the non-transmitted BSSID profile 1 in the MBSSID element 2. For details, refer to the descriptions of the station 1. Details are not described again.

In conclusion, the station #A (the station 1 and the station 2 are not distinguished) determines, based on the indication of the indication information 1, whether the non-transmitted BSSID profile in the MBSSID element 2 needs to be read. This can avoid unnecessary energy consumption caused by a case in which the station #A (the station 1 and the station 2 are not distinguished) reads the non-transmitted BSSID profile when the non-transmitted BSSID profile does not include the RTWT information of a non-transmitted AP.

It should be noted that the radio frame 2 may further include the MBSSID element 2. For descriptions of the MBSSID element 2, refer to the descriptions in Table 1. Details are not described herein again.

The scenario shown in (b) in FIG. 1 is used as an example.

Specifically, the station 1 determines, based on the indication information 1 in the radio frame 2, whether to read all the non-transmitted BSSID profile or the non-transmitted BSSID profile 1 in the MBSSID element 2. Similarly, the station 2 may also determine, based on an indication of the indication information 1, whether to read all the non-transmitted BSSID profile or the non-transmitted BSSID profile 1 in the MBSSID element 2. For details, refer to the descriptions of the station 1. Details are not described again.

In conclusion, the station #A (the station 1 and the station 2 are not distinguished) determines, based on the indication of the indication information 1, whether the non-transmitted BSSID profile in the MBSSID element 2 needs to be read. This can avoid unnecessary energy consumption caused by a case in which the station #A (the station 1 and the station 2 are not distinguished) reads the non-transmitted BSSID profile when the non-transmitted BSSID profile does not include the RTWT information of a non-transmitted AP.

In a possible implementation, the method 700 may further include the following step.

S740: The station #A terminates a transmit opportunity based on an RTWT parameter corresponding to the non-transmitted BSSID profile before an RTWTSP of the non-transmitted access point corresponding to the non-transmitted BSSID profile; or the station #A determines, based on an RTWT parameter corresponding to the non-transmitted BSSID profile before an RTWTSP of the non-transmitted access point corresponding to the non-transmitted BSSID profile, whether to initiate transmission.

For ease of understanding, the station #A is no longer used in the following descriptions of S740, but a specific station is used as an example for description.

The scenario shown in (a) in FIG. 1 is used as an example.

Specifically, when the station 1 reads all the non-transmitted BSSID profile or the non-transmitted BSSID profile 1 in the MBSSID element 2 based on the indication of the indication information 1, after the station 1 obtains an RTWT parameter of a non-transmitted access point #b (a specific non-transmitted access point is not distinguished, and the access point corresponds to the non-transmitted BSSID profile read by the station 1), if the TXOP is obtained before an RTWTSP of the non-transmitted access point #b, the TXOP needs to be terminated before the RTWTSP of the non-transmitted access point #b. In addition, when the station 1 backs off to 0 through channel contention before the RTWTSP of the non-transmitted access point #b, the station 1 also needs to determine, before the RTWTSP of the non-transmitted access point #b, whether there is an enough time for transmission. If the time is not enough, the station 1 does not initiate transmission. In this way, the station 1 may not cause interference to low-delay service transmission of the non-transmitted access point. Similarly, the station 2 may also perform the foregoing processing. Details are not described again.

For descriptions of the scenario shown in (b) in FIG. 1, refer to the descriptions of the scenario shown in (a) in FIG. 1. Details are not described again.

According to the method 700, in this application, the station #A (the station 1 and the station 2 are not distinguished) can determine, based on the indication information, whether to read all the non-transmitted BSSID profile or the non-transmitted BSSID profile 1 in the MBSSID element 2. In this way, power consumption of the station #A can be reduced.

In the method 700, in this application, when the radio frame 2 includes a TWT element 2, the TWT element 2 can exclude the RTWT information of the non-transmitted access point. In this way, overheads of the radio frame 2 can be effectively reduced.

The foregoing describes the method embodiments in embodiments of this application, and the following describes corresponding apparatus embodiments.

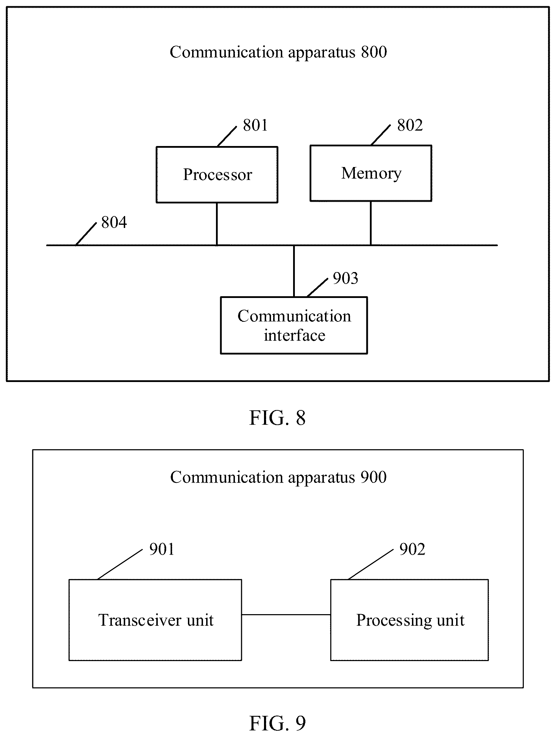

FIG. 8 is a block diagram of a communication apparatus 800 according to an embodiment of this application. The communication apparatus 800 includes a processor 801, a memory 802, and a communication interface 803. The processor 801, the memory 802, and the communication interface 803 are connected to each other through a bus 804. The communication apparatus 800 may be an access point 1, or may be a station #A (for example, a station 1 to a station 3).

Specifically, the memory 802 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 802 is configured to store related instructions and data.

The processor 801 may be one or more central processing units (central processing units, CPUs). When the processor 801 is one CPU, the CPU may be a single-core CPU or a multicore CPU.

For example, when the communication apparatus 800 is the access point 1, the processor 801 is configured to read program code stored in the memory 802, to perform the following operations: generating a radio frame 1, where the radio frame 1 includes an MBSSID element 1 and a TWT element 1 located outside the MBSSID element 1, and the TWT element 1 includes an RTWT parameter 1 and identification information 1; and sending the radio frame 1.

For example, when the communication apparatus 800 is the station #A, the processor 801 is configured to read program code stored in the memory 802, to perform the following operations: receiving a radio frame 1 from the access point 1, where the radio frame 1 includes an MBSSID element 1 and a TWT element 1 located outside the MBSSID element 1, and the TWT element 1 includes an RTWT parameter 1 and identification information 1; and determining, based on the identification information, an access point to which the RTWT parameter belongs.

It should be noted that for implementations of all operations in FIG. 8, refer to corresponding descriptions in the method embodiments shown in FIG. 3 to FIG. 7.

FIG. 9 is a block diagram of a communication apparatus 900 according to an embodiment of this application. The communication apparatus 900 is applied to an access point 1, or may be applied to a station, and may be configured to implement the method in the foregoing method embodiments. The communication apparatus 900 includes a transceiver unit 901 and a processing unit 902. The following describes the transceiver unit 901 and the processing unit 902.

For example, when the communication apparatus 900 is the access point 1, the processing unit 902 is configured to generate a radio frame 1, and the transceiver unit 901 is configured to send the radio frame 1 to the station.

For example, when the communication apparatus 900 is a station #A, the transceiver unit 901 is configured to receive a radio frame 1 from the access point 1; and the processing unit 902 is configured to determine, based on identification information, an access point to which an RTWT parameter belongs.

It should be noted that, for implementations of all operations in FIG. 9, refer to corresponding descriptions in the method shown in the foregoing embodiments. This is merely an example for understanding herein.

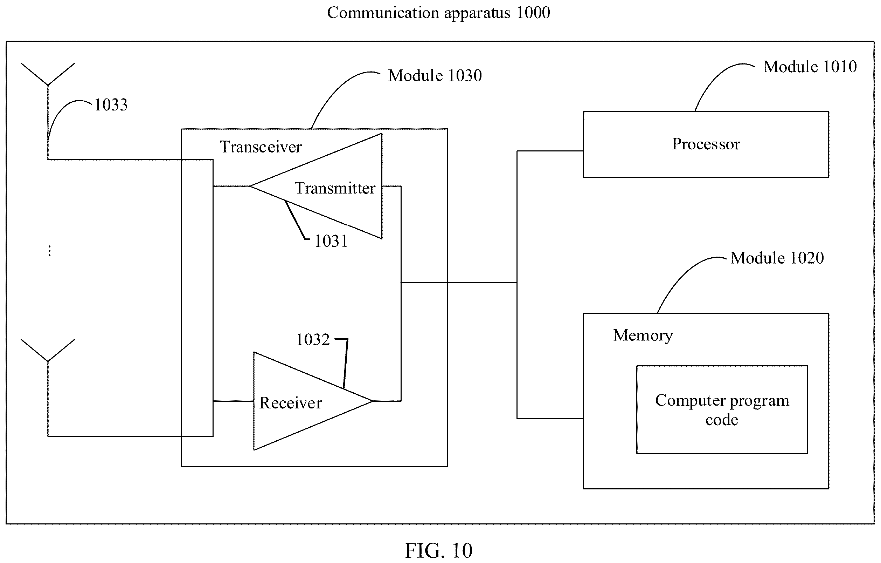

FIG. 10 is a block diagram of a communication apparatus 1000 according to an embodiment of this application. The communication apparatus 1000 may be an access point 1, or may be a chip. The communication apparatus 1000 may be configured to perform operations performed by the access point 1 in the method embodiments shown in FIG. 3 to FIG. 7.

When the communication apparatus 1000 is an access point 1, for example, a base station, FIG. 10 is a diagram of a simplified structure of the base station. The base station includes a module 1010, a module 1020, and a module 1030. The module 1010 is mainly configured to: perform baseband processing, control the base station, and the like. The module 1010 is usually a control center of the base station, may be usually referred to as a processor, and is configured to control the base station to perform a processing operation on a network device side in the foregoing method embodiments. The module 1020 is mainly configured to store computer program code and data. The module 1030 is mainly configured to: receive and send a radio frequency signal and perform conversion between the radio frequency signal and a baseband signal. The module 1030 may be usually referred to as a transceiver module, a transceiver machine, a transceiver circuit, a transceiver, or the like. The transceiver module of the module 1030 may also be referred to as a transceiver machine, a transceiver, or the like, and includes an antenna 1033 and a radio frequency circuit (not shown in FIG. 10). The radio frequency circuit is mainly configured to perform radio frequency processing. Optionally, a component configured to implement a receiving function in the module 1030 may be considered as a receiver, and a component configured to implement a sending function may be considered as a transmitter. In other words, the module 1030 includes a receiver 1032 and a transmitter 1031. The receiver may also be referred to as a receiving module, a receiver machine, a receiver circuit, or the like, and the transmitter may be referred to as a transmitting module, a transmitter machine, a transmitter circuit, or the like.

The module 1010 and the module 1020 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, the plurality of boards share one or more memories, or the plurality of boards share one or more processors at the same time.

For example, in an implementation, the transceiver module of the module 1030 is configured to perform a receiving/sending-related process performed by the network device in embodiments shown in FIG. 3 to FIG. 7. The processor of the module 1010 is configured to perform a processing-related process performed by the network device in embodiments shown in FIG. 3 to FIG. 7.

In another implementation, the processor of the module 1010 is configured to perform a processing-related process performed by the communication device in embodiments shown in FIG. 3 to FIG. 7.

In another implementation, the transceiver module of the module 1030 is configured to perform a sending/receiving-related process performed by the communication device in embodiments shown in FIG. 3 to FIG. 7.

It should be understood that FIG. 10 is merely an example rather than a limitation. The network device including the processor, the memory, and the transceiver may not depend on the structures shown in FIG. 8 and FIG. 9.

When the communication apparatus 1000 is the chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

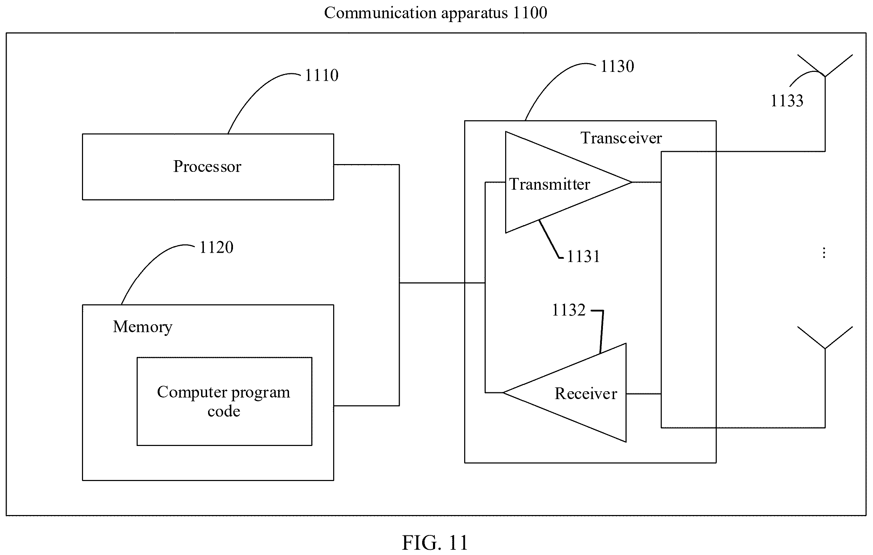

FIG. 11 is a block diagram of a communication apparatus 1100 according to an embodiment of this application. The communication apparatus 1100 may be a station #A, a processor of the station #A, or a chip. The communication apparatus 1100 may be configured to perform operations performed by the station #A or the communication device in the foregoing method embodiments.

When the communication apparatus 1100 is the station #A, and the station #A is a terminal device, FIG. 10 is a diagram of a simplified structure of the terminal device. As shown in FIG. 11, the terminal device includes a processor 1110, a memory 1120, and a transceiver 1130. The memory 1120 may store computer program code. The transceiver 1130 includes a transmitter 1131, a receiver 1132, a radio frequency circuit (not shown in FIG. 11), an antenna 1133, and an input/output apparatus (not shown in FIG. 11).

The processor 1110 is mainly configured to: process a communication protocol and communication data, control the terminal device, execute a software program, process data of the software program, and the like. The memory 1120 is mainly configured to store the software program and data. The radio frequency circuit is mainly configured to: perform conversion between a baseband signal and a radio frequency signal, and process the radio frequency signal. The antenna 1133 is mainly configured to receive and send a radio frequency signal in a form of electromagnetic wave. The input/output apparatus, for example, a touchscreen, a display, or a keyboard, is mainly configured to: receive data input by a user and output data to the user. It should be noted that some types of terminal devices may have no input/output apparatus.

When data needs to be sent, the processor performs baseband processing on to-be-sent data, and then outputs a baseband signal to a radio frequency circuit. The radio frequency circuit performs radio frequency processing on the baseband signal, and then sends, through the antenna, a radio frequency signal in a form of electromagnetic wave. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 11 merely shows one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 11, the terminal device includes the processor 1110, the memory 1120, and the transceiver 1130. The processor 1110 may also be referred to as a processing unit, a processing board, a processing module, a processing apparatus, or the like. The transceiver 1130 may also be referred to as a transceiver unit, a transceiver machine, a transceiver apparatus, or the like.

Optionally, a component configured to implement a receiving function in the transceiver 1130 may be considered as a receiving module, and a component configured to implement a sending function in the transceiver 1130 may be considered as a sending module. That is, the transceiver 1130 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 1110 is configured to perform a processing action on a station side in embodiments shown in FIG. 3 to FIG. 7, and the transceiver 1130 is configured to perform receiving and sending actions on the station side in FIG. 3 to FIG. 7.

For example, in an implementation, the processor 1110 is configured to perform a processing action on the station side in embodiments shown in FIG. 3 to FIG. 7, and the transceiver 1130 is configured to perform receiving and sending actions on the station side in FIG. 3 to FIG. 7.

It should be understood that FIG. 11 is merely an example rather than a limitation. The terminal device including the transceiver module and the processing module may not depend on the structures shown in FIG. 8 and FIG. 9.

When the communication apparatus 1100 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

An embodiment of this application further provides a chip, including a processor, configured to invoke, from a memory, instructions stored in the memory and run the instructions, to enable a communication device on which the chip is mounted to perform the method in the foregoing examples.

An embodiment of this application further provides another chip, including an input interface, an output interface, a processor, and a memory. The input interface, the output interface, the processor, and the memory are connected through an internal connection path. The processor is configured to execute code in the memory. When the code is executed, the processor is configured to perform the methods in the foregoing examples.

An embodiment of this application further provides a processor, configured to be coupled to a memory, and configured to perform a method and a function that are related to a satellite or user equipment in any one of the foregoing embodiments.

In another embodiment of this application, a computer program product is provided. When the computer program product runs on a computer, the method in the foregoing embodiment is implemented.

Another embodiment of this application provides a computer-readable storage medium. The computer-readable storage medium stores a computer program. When the computer program is executed by a computer, the method in the foregoing embodiments is implemented.

In the descriptions of embodiments of this application, the term "a plurality of" means two or more than two unless otherwise specified. "At least one of the following items (pieces)" or a similar expression thereof refers to any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the expression such as "example" or "for example" is used to represent giving an example, an illustration, or description.

Any embodiment or design scheme described as an "example" or "for example" in embodiments of this application should not be explained as being more preferred or having more advantages than another embodiment or design scheme. Exactly, use of the word like "example" or "for example" is intended to present a related concept in a specific manner for ease of understanding.

Unless otherwise specified, "/" in the descriptions of embodiments of this application indicates an "or" relationship between associated objects. For example, A/B may indicate A or B. In this application, "and/or" indicates only an association relationship for describing associated objects and indicates that three relationships may exist. For example, A and/or B may indicate the following three cases: Only A exists, both A and B exist, and only B exists. A and B may be singular or plural.

It should be understood that "one embodiment" or "an embodiment" mentioned throughout this specification means that particular features, structures, or characteristics related to embodiments are included in at least one embodiment of the present invention.

Therefore, "in one embodiment" or "in an embodiment" appearing throughout the specification does not necessarily refer to a same embodiment. In addition, these particular features, structures, or characteristics may be combined in one or more embodiments in any appropriate manner. Sequence numbers of the foregoing processes do not mean execution sequences in various embodiments of the present invention. The execution sequences of the processes should be determined based on functions and internal logic of the processes, and should not be construed as any limitation on implementation processes of embodiments of the present invention.

It may be understood that an "embodiment" mentioned throughout this specification means that particular features, structures, or characteristics related to embodiments are included in at least one embodiment of this application.

Therefore, embodiments in the entire specification are not necessarily a same embodiment. In addition, these particular features, structures, or characteristics may be combined in one or more embodiments in any appropriate manner. It may be understood that sequence numbers of the processes do not mean execution sequences in various embodiments of this application. The execution sequences of the processes should be determined based on functions and internal logic of the processes, and should not be construed as any limitation on implementation processes of embodiments of this application.

A person of ordinary skill in the art may be aware that, with reference to examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected as required to achieve the objectives of the solutions of embodiments. In addition, functional units in embodiments of this application may be integrated into one processing unit, each of the units may exist alone physically, or two or more units are integrated into one unit.

When the functions are implemented in the form of software functional unit and sold or used as an independent product, the functions may be stored in a computer-readable storage medium. Based on such an understanding, the technical solutions of this application essentially, or the part contributing to the conventional technologies, or some of the technical solutions may be implemented in a form of software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
generating, by a first access point, a radio frame, wherein
the radio frame comprises a multiple basic service set identifier MBSSID element and a target wake time TWT element located outside the MBSSID element, the MBSSID element corresponds to an MBSSID set to which the first access point and a second access point belong, and the TWT element comprises a first restricted target wake time RTWT parameter of the second access point and identification information of the second access point; and
sending, by the first access point, the radio frame.

2. The method according to claim 1, wherein the MBSSID element does not comprise a second RTWT parameter of the second access point, and the first RTWT parameter is the same as the second RTWT parameter.

3. The method according to claim 1, wherein the MBSSID element comprises a second RTWT parameter of the second access point, and the first RTWT parameter is the same as the second RTWT parameter; and
the identification information of the second access point indicates to ignore the first RTWT parameter; or
the identification information of the second access point indicates to ignore the second RTWT parameter.

4. The method according to any one of claims 1 to 3, wherein the TWT element further comprises identification information of a third access point and a third RTWT parameter of the third access point, and the third access point and the first access point belong to a same co-hosted BSSID set.

5. The method according to any one of claims 1 to 4, wherein the identification information of the second access point comprises:
a basic service set identifier index or a first value.

6. The method according to claim 4 or 5, wherein the identification information of the third access point comprises a second value.

7. The method according to claim 6, wherein the identification information of the second access point and the identification information of the third access point are comprised in TWT parameter information in the TWT element.

8. The method according to claim 7, wherein
the identification information of the second access point is comprised in nominal minimum TWT wake duration in the TWT parameter information; or
the identification information of the second access point is comprised in broadcast TWT information in the TWT parameter information; or
the identification information of the second access point is comprised in a basic service set identifier index field in the TWT parameter information; or
the identification information of the third access point is comprised in nominal minimum TWT wake duration in the TWT parameter information; or
the identification information of the third access point is comprised in broadcast TWT information in the TWT parameter information; or
the identification information of the third access point is comprised in a basic service set identifier index field in the TWT parameter information.

9. The method according to claim 8, wherein the broadcast TWT information comprises:
a broadcast TWT identifier or a basic service set identifier index subfield.

10. A wireless communication method, comprising:
receiving, by a station, a radio frame from a first access point, wherein
the radio frame comprises a multiple basic service set identifier MBSSID element and a target wake time TWT element located outside the MBSSID element, the MBSSID element corresponds to an MBSSID set to which the first access point and a second access point belong, and the TWT element comprises a first restricted target wake time RTWT parameter of the second access point and identification information of the second access point; and
determining, by the station based on the identification information, that the first RTWT parameter belongs to the second access point.

11. The method according to claim 10, wherein the MBSSID element does not comprise a second RTWT parameter of the second access point, and the first RTWT parameter is the same as the second RTWT parameter.

12. The method according to claim 10, wherein the MBSSID element comprises a second RTWT parameter of the second access point, and the first RTWT parameter is the same as the second RTWT parameter; and
the identification information of the second access point indicates to ignore the first RTWT parameter; or
the identification information of the second access point indicates to ignore the second RTWT parameter.

13. The method according to any one of claims 10 to 12, wherein the TWT element further comprises identification information of a third access point and a third RTWT parameter of the third access point, and the third access point and the first access point belong to a same co-hosted BSSID set.

14. The method according to any one of claims 10 to 13, wherein the identification information of the second access point comprises:
a basic service set identifier index or a first value.

15. The method according to claim 13 or 14, wherein the identification information of the third access point comprises a second value.

16. The method according to claim 15, wherein the identification information of the second access point and the identification information of the third access point are comprised in TWT parameter information in the TWT element.

17. The method according to claim 16, wherein
the identification information of the second access point is comprised in nominal minimum TWT wake duration in the TWT parameter information; or
the identification information of the second access point is comprised in broadcast TWT information in the TWT parameter information; or
the identification information of the second access point is comprised in a basic service set identifier index field in the TWT parameter information; or
the identification information of the third access point is comprised in nominal minimum TWT wake duration in the TWT parameter information; or
the identification information of the third access point is comprised in broadcast TWT information in the TWT parameter information; or
the identification information of the third access point is comprised in a basic service set identifier index field in the TWT parameter information.

18. The method according to claim 17, wherein the broadcast TWT information comprises:
a broadcast TWT identifier or a basic service set identifier index subfield.

19. The method according to any one of claims 10 to 18, wherein the method further comprises:
terminating, by the station, a transmit opportunity based on the first RTWT parameter or the second RTWT parameter before an RTWT service period of the second access point; or
determining, by the station based on the first RTWT parameter or the second RTWT parameter before an RTWT service period of the second access point, whether to initiate transmission.

20. A communication apparatus, comprising:
a processing unit, configured to generate a radio frame, wherein
the radio frame comprises a multiple basic service set identifier MBSSID element and a target wake time TWT element located outside the MBSSID element, the MBSSID element corresponds to an MBSSID set to which the communication apparatus and a second access point belong, and the TWT element comprises a first restricted target wake time RTWT parameter of the second access point and identification information of the second access point; and
a transceiver unit, configured to send the radio frame.

21. The apparatus according to claim 20, wherein the MBSSID element does not comprise a second RTWT parameter of the second access point, and the first RTWT parameter is the same as the second RTWT parameter.

22. The apparatus according to claim 20, wherein the MBSSID element comprises a second RTWT parameter of the second access point, and the first RTWT parameter is the same as the second RTWT parameter; and
the identification information of the second access point indicates to ignore the first RTWT parameter; or
the identification information of the second access point indicates to ignore the second RTWT parameter.

23. The apparatus according to any one of claims 20 to 22, wherein the TWT element further comprises identification information of a third access point and a third RTWT parameter of the third access point, and the third access point and the communication apparatus belong to a same co-hosted BSSID set.

24. The apparatus according to any one of claims 20 to 23, wherein the identification information of the second access point comprises:
a basic service set identifier index or a first value.

25. The apparatus according to claim 23 or 24, wherein the identification information of the third access point comprises a second value.

26. The apparatus according to claim 25, wherein the identification information of the second access point and the identification information of the third access point are comprised in TWT parameter information in the TWT element.

27. The apparatus according to claim 26, wherein
the identification information of the second access point is comprised in nominal minimum TWT wake duration in the TWT parameter information; or
the identification information of the second access point is comprised in broadcast TWT information in the TWT parameter information; or
the identification information of the second access point is comprised in a basic service set identifier index field in the TWT parameter information; or
the identification information of the third access point is comprised in nominal minimum TWT wake duration in the TWT parameter information; or
the identification information of the third access point is comprised in broadcast TWT information in the TWT parameter information; or
the identification information of the third access point is comprised in a basic service set identifier index field in the TWT parameter information.

28. The apparatus according to claim 27, wherein the broadcast TWT information comprises:
a broadcast TWT identifier or a basic service set identifier index subfield.

29. A communication apparatus, comprising:
a transceiver unit, configured to receive a radio frame from a first access point, wherein
the radio frame comprises a multiple basic service set identifier MBSSID element and a target wake time TWT element located outside the MBSSID element, the MBSSID element corresponds to an MBSSID set to which the first access point and a second access point belong, and the TWT element comprises a first restricted target wake time RTWT parameter of the second access point and identification information of the second access point; and
a processing unit, configured to determine, based on the identification information, that the first RTWT parameter belongs to the second access point.

30. The apparatus according to claim 29, wherein the MBSSID element does not comprise a second RTWT parameter of the second access point, and the first RTWT parameter is the same as the second RTWT parameter.

31. The apparatus according to claim 29, wherein the MBSSID element comprises a second RTWT parameter of the second access point, and the first RTWT parameter is the same as the second RTWT parameter; and
the identification information of the second access point indicates to ignore the first RTWT parameter; or
the identification information of the second access point indicates to ignore the second RTWT parameter.

32. The apparatus according to any one of claims 29 to 31, wherein the TWT element further comprises identification information of a third access point and a third RTWT parameter of the third access point, and the third access point and the first access point belong to a same co-hosted BSSID set.

33. The apparatus according to any one of claims 29 to 32, wherein the identification information of the second access point comprises: a basic service set identifier index or a first value.

34. The apparatus according to claim 32 or 33, wherein the identification information of the third access point comprises a second value.

35. The apparatus according to claim 34, wherein the identification information of the second access point and the identification information of the third access point are comprised in TWT parameter information in the TWT element.

36. The apparatus according to claim 35, wherein
the identification information of the second access point is comprised in nominal minimum TWT wake duration in the TWT parameter information; or
the identification information of the second access point is comprised in broadcast TWT information in the TWT parameter information; or
the identification information of the second access point is comprised in a basic service set identifier index field in the TWT parameter information; or
the identification information of the third access point is comprised in nominal minimum TWT wake duration in the TWT parameter information; or
the identification information of the third access point is comprised in broadcast TWT information in the TWT parameter information; or
the identification information of the third access point is comprised in a basic service set identifier index field in the TWT parameter information.

37. The apparatus according to claim 36, wherein the broadcast TWT information comprises:
a broadcast TWT identifier or a basic service set identifier index subfield.

38. The apparatus according to any one of claims 29 to 37, wherein the processing unit is further configured to:
terminate a transmit opportunity based on the first RTWT parameter or the second RTWT parameter before an RTWT service period of the second access point; or
determine, based on the first RTWT parameter or the second RTWT parameter before an RTWT service period of the second access point, whether to initiate transmission.

39. A communication device, comprising a communication interface and a processor, wherein the processor is configured to execute a computer program or instructions, to enable the communication device to perform the method according to any one of claims 1 to 19.

40. A computer-readable storage medium, comprising a computer program or instructions, wherein when the computer program or the instructions are run on a computer, the computer is enabled to perform the method according to any one of claims 1 to 19.

41. A computer program product, comprising instructions, wherein when the instructions are run on a computer, the computer is enabled to perform the method according to any one of claims 1 to 19.
